# EUROPÄISCHE PATENTSCHRIFT

(11) **EP 0 586 494 B1**
(45) Veröffentlichungstag und Bekanntmachung des Hinweises auf die Patenterteilung: **02.10.1996**
(21) Anmeldenummer: 92911509.5
(22) Anmeldetag: 26.05.1992
(51) Int. Cl.: G01N 1/30

(54) **VERFAHREN UND VORRICHTUNG ZUR FÄRBUNG VON AUF OBJEKTTRÄGERN ANGEORDNETEN HISTOLOGISCHEN PRÄPARATEN**
PROCESS AND DEVICE FOR DYEING HISTOLOGICAL PREPARATIONS ARRANGED ON MICROSCOPE SLIDES
PROCEDE ET DISPOSITIF DE COLORATION DE PREPARATIONS HISTOLOGIQUES AGENCES SUR DES LAMES DE MICROSCOPE

(30) Priorität: 29.05.1991 DE 4117833
(43) Veröffentlichungstag der Anmeldung: 16.03.1994
(73) Patentinhaber: MEDITE GESELLSCHAFT FUR MEDIZINTECHNIK mbH, D-31303 Burgdorf (DE)
(72) Erfinder: GOLDBECKER, Helmut, D-3004 Isernhagen 4 (DE); VAUTH, Reinhard, D-3004 Isernhagen 4 (DE)
(74) Vertreter: Patentanwälte Thömen & Körner
(86) Internationale Anmeldenummer: DE9200453
(87) Internationale Veröffentlichungsnummer: WO9221953

(56) Entgegenhaltungen:
- EP-A- 0 323 130
- GB-A- 2 196 428
- US-A- 3 674 040
- US-A- 3 976 028

## Beschreibung

Die Erfindung betrifft ein Verfahren zur Färbung von auf Objektträgern angeordneten histologischen Präparaten nach dem Oberbegriff des Anspruchs 1.

Bei der mikroskopischen Untersuchung histologischer Präparate ist die Färbung eine der am häufigsten angewandten Methoden, die Strukturen in Zellen und Geweben differenziert und kontrastreich sichtbar zu machen. Durch geeignete Steuerungen des Färbungsprozesses können einzelne Strukturen selektiv hervorgehoben werden.

Bei der Färbung histologischer Präparate für mikroskopische Untersuchungen werden die physikalischen und chemischen Eigenschaften der Struktur in den Zellen und Geweben zur Bindung bestimmter Farbstoffe ausgenutzt. Für histologische Färbungen werden Naturfarbstoffe, in der Mehrzahl aber synthetische Farbstoffe verwendet. Die meisten sind Diachrome, d. h., sie absorbieren im Bereich des sichtbaren Lichtes, andere leuchten erst bei UV-Strahlungen auf, sie sind Fluoreszenzfarbstoffe. Wichtig für die Färbung ist die Ladung der Farbstoffe. Es gibt elektronegative, elektropositive und neutrale. Bei Verwendung mehrerer Farbstoffe werden diese entweder hintereinander oder simultan in einer Farbstofflösung gleichzeitig angeboten.

Bisher werden Färbungen histologischer Präparate noch zu 80 % in gesundheitsgefährdender Handarbeit und nur zu 20 % vollautomatisch durchgeführt. Die Ursache hierfür liegt darin, daß die auf dem Markt angebotenen Färbeautomaten nur jeweils eine Färbemethode zur Zeit beherrschen und bei Wechsel der Färbemethode umgerüstet oder umprogrammiert werden müssen.

Ein bekannter Färbeautomat der Firma "medite' arbeitet nach dem Prinzip einer immer wiederkehrenden Transportbewegung für die Objektträgerhalter, in denen sich Objektträger mit histologischen Präparaten befinden. Bei dieser Transportbewegung werden die Objektträgerhalter zu bis zu 23 hintereinander befindlichen Behandlungsstationen transportiert. Ein in eine erste Position einer Transportschiene eingehängter Objektträgerhalter wird von der Transportschiene um einen bestimmten Weg bis zur Behandlungsstation befördert und dort in einen ersten Trog mit einer Reagenz abgesenkt. Dabei kann während der Behandlungszeit eine zusätzliche Auf- und Abbewegung (Agitation) durchgeführt werden. Anschließend wird der Objektträgerhalter in den Trog ganz abgesenkt und die Transportschiene fährt unter dem Tragbügel des Objektträgerhalters den Weg wieder zurück. Sobald die Anfangsposition erreicht ist, kann ein zweiter Objektträgerhalter in die erste Position der Transportschiene nachrücken.

Nach Durchführung dieses Verfahrensschrittes hebt die Transportschiene den ersten Objektträgerhalter aus der Reagenz, hält ihn entsprechend einer vorwählbaren Abtropfzeit oberhalb des Troges und fährt dann um eine Position weiter zur nächsten Behandlungsstation. Dort wird der erste Objektträgerhalter in den zweiten Trog und der zweite Objektträgerhalter in den ersten Trog abgesenkt. Nach diesem Prinzip durchlaufen die Objektträgerhalter sämtliche Behandlungsstationen und können anschließend am Ende des Schlittens entnommen werden. Der Zeittakt für die Transportbewegung kann in einem vorgegebenen Rahmen frei gewählt werden und ist für alle Behandlungsstationen gleich. Verschieden lange Behandlungszeiten erhält man durch Hintereinanderschalten gleicher Behandlungsstationen.

Ein weiterer bekannter Färbeautomat der Firma "Shandon" arbeitet nach der Karussell-Methode. Hierbei sind 24 Behandlungsstationen, die frei wählbar sind, in einem Kreis angeordnet. Die Reihenfolge, in der die Behandlungsstationen angefahren werden können, ist jedoch durch die Karussell-Methode fest vorgegeben. Über den Behandlungsstationen befindet sich ein Deckel, der auf- und abgefahren und im Uhrzeigersinn gedreht werden kann. In diesem Deckel werden die Objektträgerhalter mit den zu färbenden Präparaten auf Objektträgern eingehängt und mit ihnen zu den Behandlungsstationen transportiert. Während des Färbevorganges kann eine Agitationsbewegung des Deckels eingeschaltet werden. Eine weitere Funktion des Deckels ist der Schutz gegen die Verdunstung von Reagenzien. Die Schutzfunktion ist aber nur im abgesenkten Zustand gegeben. Die Behandlungszeit in den einzelnen Behandlungsstationen kann für jede der 24 Behandlungsstationen einzeln programmiert werden. Es ist auch möglich, zwei verschiedene Färbeprogramme abzuspeichern, die dann bei Bedarf per Knopfdruck aufgerufen werden können. Diese Färbeprogramme können aber nicht gleichzeitig ablaufen.

Bei einem Färbeautomaten der Firma "Sakura" ist eine matrixförmige Anordnung von Behandlungsstationen vorgesehen, die über eine dreiachsige Steuerung angefahren werden können. Es besteht zwar Zugriff auf jede Behandlungsstation, so daß ein Färbevorgang in beliebiger Reihenfolge durchgeführt werden kann, jedoch läßt sich nur eine Färbemethode zur Zeit durchführen.

Aus der GB-A-2 196 428 ist eine Vorrichtung zur automatischen Färbung von Präparaten zur mikroskopischen Untersuchung bekannt. Die bekannte Vorrichtung umfaßt mehrere Behandlungsstationen, zu denen auf Objektträgern angeordnete histologische Präparate auf Objektträger-haltern transportiert und dort Behandlungsmaßnahmen entsprechend einer wählbaren Färbemethode ausgesetzt werden. Die Transportvorrichtung umfaßt Kuppelelemente, welche nach Einsetzen eines Objektträgerhalters in eine Behandlungsstation von diesen gelöst werden können, so daß eine Verbindung mit einem anderen Objektträgerhalter ermöglicht wird. Die Transportvorrichtung wird von einer Steuerung, in die die Färbeprogramme vor Durchführung jedes Färbevorganges eingegeben werden müssen, so gesteuert, daß sie in Abhängigkeit der gewählten Färbemethode die anderen Objektträgerhalter zu freien Behandlungsstationen transportieren kann.

Aus dem Dokument US-A-3 674 040 ist ein Färbeautomat bekannt, der zwei Reihen Bäder mit Färbereagenzien umfaßt, wobei die Reihen jeweils in zwei Etagen angeordnet sind. Mittels einer nur in Querrichtung verfahrbaren sowie anhebbaren und absenkbaren Transportvorrichtung können Objektträgerhalter jeweils zu Einsatzpositionen der Bäder befördert werden. Ein gezieltes Anfahren der Bäder ist nicht möglich. Vielmehr müssen die Bäder selbst zu den entsprechenden Einsatzpositionen verschoben werden, wobei die Bäder in jeder Etage nach Art einer Kette miteinander gekoppelt sind und sich gemeinsam verschieben lassen und wobei der Übergang von einer Etage zur anderen mit Hilfe von Aufzügen am Anfang und Ende der Reihe durchgeführt wird. Dabei ist der Bewegungsablauf der Kette und derjenige der Aufzüge nur auf eine Bewegungsrichtung beschränkt.

Zwischen den Reihen mit Bädern befindet sich eine Spülkammer über der Objektträgerhalter in einer mittleren Position der Transportvorrichtung abtropfen oder eingetaucht und gespült werden können.

Ferner ist vorgesehen, daß die Reagenzien durch Rührflügel umgerührt werden können, die mittels einer von der Öffnungsseite der Bäder eingefahrenen Antriebsvorrichtung in Drehung versetzbar sind.

Der Erfindung liegt die Aufgabe zugrunde, ein Verfahren zur Färbung von auf Objektträgern angeordneten histologischen Präparaten dahingehend zu verbessern, daß die Voraussetzungen geschaffen werden, Präparate nach unterschiedlichen Färbemethoden parallel behandeln zu können.

Diese Aufgabe wird bei einem Verfahren nach dem Oberbegriff des Anspruchs 1 durch die im Kennzeichen angegebenen Merkmale gelöst.

Das erfindungsgemäße Verfahren beseitigt die Einschränkungen bekannter Färbeautomaten, mit denen sich nur jeweils eine Färbemethode zur Zeit durchführen läßt. Dabei wird die Behandlungszeit, während der ein Objektträger in einer Behandlungsstation verbleibt, dazu ausgenutzt, um einen oder mehrere weitere Objektträgerhalter zu anderen Behandlungsstationen zu transportieren. Es ist dadurch möglich, die Präparate in jedem Objektträgerhalter einer anderen Färbemethode zu unterziehen. Natürlich können aber auch, wie es die bekannten Färbeautomaten ermöglichen, mehrere Objektträgerhalter nacheinander zu den gleichen Behandlungsstationen transportiert werden, um die Präparate nach der gleichen Färbemethode einzufärben.

Da die Objektträgerhalter vollständig von der Transportvorrichtung getrennt werden, wird die Möglichkeit geschaffen, andere Objektträgerhalter an jede von der gewählten Färbemethode vorgegebene Behandlungsstation zu transportieren. Mit dem erfindungsgemäßen Verfahren läßt sich somit eine wirtschaftliche Durchführung des Färbeprozesses auch für solche Präparate erreichen, die nach einer relativ selten angewandten Färbemethode gefärbt werden müssen und für die bisher eine Umrüstung der Färbeautomaten nicht lohnenswert erschien.

Im übrigen wird auch die Gesamtzeit, die zum Färben verschiedener Präparate aufzuwenden ist, erheblich verkürzt, da mehrere Färbeprozesse parallel laufen können und sich gegenseitig nicht stören.

Für jede wählbare Färbemethode wird ein Programmraster gespeichert, das Transportzeiten, Behandlungszeiten, bedarfsweise Behandlungstemperaturen und Behandlungsstationen umfaßt. Der Programmstart unterschiedlicher Färbemethoden wird im Sinne eines überlappungsfreien Parallellaufs der Programmraster automatisch berechnet.

Dadurch ergibt sich eine Optimierung bezüglich der benötigten Zeit, wenn mehrere unterschiedliche Färbemethoden angewandt werden.

Weiterhin ist vorgesehen, daß der Bewegungsablauf der Transportvorrichtung zwischen den einzelnen Behandlungsstationen so gesteuert wird, daß ein zum Transportieren der Objektträgerhalter zunächst aus der Ruhe sanft beschleunigt, anschließend mit konstanter Geschwindigkeit verfahren und schließlich sanft abgebremst wird.

Diese Vorgehensweise erreicht einen sehr schonenden Transport und vermeidet weitgehend Schaukelbewegungen der Objektträgerhalter, bei denen abtropfende Reagenzien in andere Behandlungsstationen gelangen und diese verunreinigen könnten. Dennoch wird gerade bei langen zurückzulegenden Transportwegen von einer Behandlungsstation zur nächsten eine kurze Transportzeit gewährleistet. Diese wiederum ermöglicht es, den Programmstart unterschiedlicher Färbemethoden so zu legen, daß nach Beginn eines Färbeprozesses der nachfolgende Färbeprozeß zum frühestmöglichen Zeitpunkt starten kann.

Eine Weiterbildung sieht vor, daß die Objektträgerhalter nach Verlassen einer Behandlungsstation mit flüssigen Reagenzien über eine separate Abtropfzone zur nächsten Behandlungsstation transportiert werden.

Bei bekannten Färbeautomaten ergaben sich Verzögerungen im Transport dadurch, daß nach Herausheben eines Objektträgers aus einer Behandlungsstation mit flüssigen Reagenzien erst abgewartet werden mußte, bis die noch anhaftenden Reagenzien abgetropft waren. Erst danach konnte die nächste Behandlungsstation angefahren werden, wenn nicht Verunreinigungen anderer Behandlungsstationen in Kauf genommen werden wollten. Bei der beschriebenen Weiterbildung hingegen wird ein Transportweg eingeschlagen, der nicht über andere Behandlungsstationen, sondern über eine Abtropfzone führt. Dadurch kann die zum Abtropfen ohnehin benötigte Zeit für den Transport ausgenutzt werden.

Bei einer praktischen Ausgestaltung werden die auf Objektträgern angeordneten zu färbenden histologischen Präparate nach durchzuführenden Färbemethoden getrennt in Objektträgerhaltern in eine Beschickungsstation gestellt. In einem Steuerprogramm wird die Position in der Beschickungsstation mit einer gewählten Färbemethode verknüpft. Dann werden die Objektträgerhalter nacheinander von der Beschickungsstation zu den Behandlungsstationen transportiert, sobald ein paralleler Behandlungsablauf gewährleistet ist und nach Durchführung der Behandlungsmaßnahmen werden die Objektträgerhalter in eine Entnahmestation abgestellt.

Diese Maßnahme hat den Vorteil, daß mehrere Objektträgerhalter mit zu färbenden Präparaten gleichzeitig in die Beschickungsstation gestellt werden können. Es muß also nicht abgewartet werden, bis ein Objektträgerhalter in den Prozeßablauf einbezogen wurde, ehe der nächste Objektträgerhalter hineingestellt werden kann. Ebenso muß für die Entnahme der behandelten Präparate nicht nach jedem abgeschlossenen Behandlungsvorgang der betreffende Objektträgerhalter entnommen werden. Vielmehr kann abgewartet werden, bis alle Objektträgerhalter den Behandlungsprozeß durchlaufen haben und dann lassen sich alle gemeinsam entnehmen und den weiteren Untersuchungen zuführen. Außerdem wird hierdurch die Zeit verkürzt, in der nach Öffnen der Vorrichtung gesundheitsschädliche Reagenziendämpfe entweichen können. Daneben verbleibt die Möglichkeit, auch einen oder mehrere Objektträgerhalter nach Bedarf zu entnehmen.

Weiterhin ist vorgesehen, daß die Objektträgerhalter in der Entnahmestation in der gleichen Position abgestellt werden, in der sie auch in die Beschickungsstation eingestellt werden.

Hierdurch wird eine eindeutige Zuordnung der behandelten Objektträgerhalter erreicht. Es ist also nicht nötig, diese jeweils nach der gewählten Färbemethode zu kennzeichnen. Vielmehr reicht es aus, die Position zu speichern, in der sie in die Beschickungsstation hineingestellt wurden. Die Gefahr von möglichen Verwechslungen wird dadurch vermieden.

Eine Weiterbildung sieht vor, daß die Objektträgerhalter von der Seite her in die Beschickungsstation gestellt und aus der Entnahmestation entnommen werden.

Durch diese Maßnahme wird erreicht, daß die zumeist leichtflüchtigen Reagenzien der Behandlungsstationen nicht oder nur in geringem Maße an die Umgebung entweichen können, wenn zu behandelnde Präparate auf ihren Objektträgerhaltern in die Vorrichtung gestellt oder behandelte entnommen werden.

Die Behandlung der Präparate sowie deren Beschickung und Entnahme erfolgt bei oberseitigem Abschluß der Vorrichtung gegen die Umgebung. Außerdem werden Reagenziendämpfe abgesaugt.

Auf diese Weise wird die Konzentration der Reagenziendämpfe im Inneren der Vorrichtung vermindert, so daß aufsteigende Reagenziendämpfe sich bevorzugt in einem Raum unterhalb des oberseitigen Abschlusses anreichern, statt über den tieferliegenden Bereich der Beschickungsund Entnahmestationen auszutreten.

Eine praktische Ausgestaltung sieht ferner vor, daß in Behandlungsstationen mit flüssigen Reagenzien eine Umwälzung der Reagenzien während der Behandlungszeit vorgenommen wird.

Diese Maßnahme ersetzt die bei bekannten Färbeautomaten durch Auf- und Abbewegung der Objektträgerhalter erreichte Umspülung der Präparate mit Reagenzien. Eine wirksame Umspülung wird hier also erreicht, obwohl die Objektträgerhalter während der Behandlungszeit in der Behandlungsstation selbst unbewegt bleiben. Außerdem wird beim Umwälzen eine bessere Durchmischung der Reagenzien erreicht, wodurch Konzentrationsänderungen in unmittelbarer Nähe der Oberfläche der Präparate vermieden werden können.

Ferner können die Behandlungen auch in beheizten Behandlungsstationen vorgenommen werden.

Auf diese Weise läßt sich die Behandlungszeit teilweise erheblich verkürzen.

Weiter ist vorgesehen, daß vor und/oder nach einzelnen Behandlungsmaßnahmen in Reagenzien eine thermische Behandlungsmaßnahme durchgeführt wird.

Derartige Behandlungsmaßnahmen können dazu dienen, die Präparate auf den Objektträgern zu trocknen oder bei vorbereiteten Präparaten durch Wärmeeinwirkung eine ursprünglich aufgebrachte Wachsschicht abschmelzen zu lassen und das Präparat gleichzeitig am Objektträger zu fixieren.

Die Erfindung betrifft ferner eine Vorrichtung zur Färbung von auf Objektträgern angeordneten histologischen Präparaten nach dem Oberbegriff des Anspruchs 11.

Diesbezüglich liegt ihr die Aufgabe zugrunde, eine Vorrichtung zu schaffen, welche eine parallele Durchführung unterschiedlicher Färbemethoden ermöglicht.

Diese Aufgabe wird bei einer Vorrichtung nach dem Oberbegriff des Anspruchs 11 durch die im kennzeichnenden Teil angegebenen Merkmale gelöst.

Die erfindungsgemäße Vorrichtung ist nicht auf die Ausübung nur einer Färbemethode zur Zeit beschränkt. Vielmehr können in der Zeit, in der ein Objektträgerhalter in einer Behandlungsstation abgesetzt ist und dort behandelt wird, ein oder mehrere andere Objektträgerhalter freien Behandlungsstationen zugeführt und die Präparate dort entsprechenden Behandlungsmaßnahmen ausgesetzt werden. Während eines laufenden Färbeprozesses lassen sich sogar mehrere Objektträgerhalter mit unterschiedlichen Präparaten nach individuell unterschiedlichen Färbemethoden behandeln. So ist ein automatischer Färbeprozeß auch für solche Färbemethoden wirtschaftlich, die gegenüber anderen Färbemethoden nur relativ selten angewandt werden müssen und für die bisher eine Umrüstung des Färbeautomaten erforderlich war.

Die bei dieser Vorrichtung vorhandene Steuerung umfaßt einen Speicher, in dem für jede wählbare Färbemethode ein Programmraster gespeichert ist, das Transportzeiten, Behandlungszeiten, bedarfsweise Behandlungstemperaturen und Behandlungsstationen umfaßt. Außerdem ist ein Rechner vorgesehen, der den Programmstart unterschiedlicher Färbemethoden zur Erzielung eines überlappungsfreien Parallellaufs der Programme steuert.

So können mehrere Färbeprozesse auch unterschiedlicher Färbemethoden ineinander verschachtelt ablaufen, ohne daß sie sich gegenseitig stören. Die Gesamtzeit für den Ablauf mehrerer unterschiedlicher Färbeprozesse läßt sich auf diese Weise reduzieren, da bei einem laufenden Färbeprozeß mit dem nächsten Färbeprozeß begonnen werden kann, sobald ein störungsfreier Ablauf beider Färbeprozesse gewährleistet ist. Dies kann bereits dann der Fall sein, wenn ein erster Objektträgerhalter seine erste Behandlungsstation erreicht hat und die Transportvorrichtung nun in der Lage ist, den nächsten Objektträgerhalter aufzunehmen und zu der von der zugeordneten Färbemethode vorgegebenen ersten Behandlungsstation zu transportieren.

Eine vorteilhafte Weiterbildung sieht vor, daß die Steuerung Stellglieder umfaßt, welche den Bewegungsablauf der Transportvorrichtung zwischen den einzelnen Behandlungsstationen so steuern, daß ein zu transportierender Objektträgerhalter zunächst aus der Ruhe sanft beschleunigt, anschließend mit konstanter Geschwindigkeit verfahren und schließlich sanft abgebremst wird.

Dieser Bewegungsablauf gestattet einen sehr schonenden, aber dennoch zügigen Transport von einer Behandlungsstation zur nächsten. Durch das sanfte Beschleunigen und Bremsen werden Schwenkbewegungen des Objektträgerhalters weitgehend verhindert, die sonst dazu führen könnten, daß noch anhaftende Reagenzien beim Abtropfen in benachbarte Behandlungsstationen geschleudert werden und diese verunreinigen. Dennoch erfolgt der Transport selbst zwischen entfernt liegenden Behandlungsstationen so schnell, daß der Programmstart nachfolgender Färbeprozesse nicht störend verzögert wird.

Bei einer praktischen Ausgestaltung der Vorrichtung ist eine separate Abtropfzone vorhanden, über die die Objektträgerhalter nach Verlassen einer Behandlungsstation mit flüssigen Reagenzien zur nächsten Behandlungsstation transportiert werden.

Durch den Transport über die Abtropfzone werden Wartezeiten vermieden, die bei den bekannten Färbeautomaten erforderlich waren, um nach einem Herausziehen der Objektträgerhalter aus einer Behandlungsstation mit flüssigen Reagenzien das Abtropfen noch anhaftender Reagenzien zu ermöglichen. Die dafür verstreichende Zeit kann nunmehr in wirtschaftlicher Weise für den Transport genutzt werden, wobei verhindert wird, daß auf dem Transportwege andere Behandlungsstationen überquert werden müssen. Die selbst nach einiger Abtropfzeit noch anhaftenden Reagenzientropfen können so andere Behandlungsstationen nicht mehr verunreinigen.

Bei einer bevorzugten Ausgestaltung besitzt die Vorrichtung eine Beschickungsstation für die nach durchzuführenden Färbemethoden getrennte Aufstellung von auf Objektträgern angeordneten zu färbenden histologischen Präparate. Weiterhin ist eine Entnahmestation vorgesehen, in der Objektträgerhalter nach Durchführung der Behandlungsmaßnahmen abgestellt werden. In einem Steuerprogramm ist die Position in der Beschickungsstation mit einer gewählten Färbemethode verknüpft und der aufeinanderfolgende Transport der Objektträgerhalter von der Beschickungsstation zu den Behandlungsstationen ist so gesteuert, daß ein paralleler Behandlungsablauf gewährleistet ist.

Durch die Beschickungs- und Entnahmestationen ist es möglich, gleich mehrere Objektträgerhalter für die Durchführung des Färbeprozesses in die Vorrichtung hineinzustellen. Es muß also nicht mehr abgewartet werden, bis der erste Objektträgerhalter von der Transportvorrichtung aufgenommen wurde, ehe der nächste Objektträgerhalter eingesetzt werden kann. Vielmehr erfolgt ein automatisches Entnehmen und späteres Abstellen der Objektträgerhalter.

Weiterhin besteht die Möglichkeit, von mehreren bereitstehenden Objektträgerhaltern denjenigen als nächsten auszuwählen, dessen Programmraster sich am günstigsten in das Programmraster des gerade laufenden Färbeprozesses einbinden läßt. Auf diese Weise kann bei mehreren unterschiedlich ablaufenden Färbemethoden die Gesamtzeit aller Färbeprozesse minimiert werden.

Ferner weisen die Beschickungsstation und die Entnahmestation Positionen zum Ein- und Abstellen der Objektträgerhalter auf, und die Transportvorrichtung ist so gesteuert, daß die Objektträgerhalter in der Entnahmestation in der gleichen Position abgestellt werden, in der sie auch in die Beschickungsstation eingestellt wurden.

Auf diese Weise ergibt sich eine einheitliche Zuordnung der Präparate zu den abgelaufenen Färbemethoden, so daß nur die Position der Objektträgerhalter gespeichert werden muß, eine gesonderte Markierung oder Beschriftung der Objektträgerhalter jedoch entfallen kann. Die Handhabung wird auf diese Weise erleichtert, ohne daß die Gefahr von Verwechslungen besteht.

Vorzugsweise besitzt die Beschickungsstation und die Entnahmestation einen frontseitigen Zugang in einem die Vorrichtung umschließenden Gehäuse.

Diese Art des Zugangs verhindert ein übermäßiges Entweichen von Reagenziendämpfen. Die Reagenziendämpfe steigen in der Regel auf Grund ihres geringeren spezifischen Gewichts als Luft nach oben, so daß sich im oberen Bereich des Gehäuses eine höhere Konzentration als im unteren bildet. Somit verbleiben also Reagenziendämpfe höherer Konzentration in der Vorrichtung selbst.

Eine Weiterbildung sieht vor, daß die Beschickungsstation und die Entnahmestation eine waagerecht verschiebbare Schublade umfassen und daß in der eingeschobenen Lage der Schublade eine Zugriffsmöglichkeit der Transportvorrichtung auf die Objektträgerhalter besteht, während in der ausgezogenen Lage die Objektträgerhalter manuell eingesetzt oder herausgenommen werden.

Diese Ausbildung der Schublade ermöglicht es, die Objektträgerhalter bequem von oben in die Schublade einzusetzen und dann sämtliche eingesetzten Objektträgerhalter in einem Bewegungsablauf in die Vorrichtung hineinzuschieben oder bereits behandelte Präparate in Objektträgerhaltern aus der Vorrichtung herauszunehmen. Durch das Einsetzen von oben gelingt es, die Objektträgerhalter einfacher zu positionieren. Außerdem läßt sich so die zum Neubeschicken und Entnehmen erforderliche Öffnungszeit der Vorrichtung verringern, was sich einmal günstig auf den wirtschaftlichen Ablauf des Färbeprozesses auswirkt und zum anderen das Entweichen von Dämpfen der Reagenzien auf ein Minimum beschränkt.

Bei einer vorteilhaften Weiterbildung der Schublade ist eine Parallelführung vorgesehen. Diese besteht aus zwei Zahnstangen, welche mit auf einer gemeinsamen Welle angeordneten Zahnrädern in Eingriff stehen.

Bei einer geringen Einbautiefe der Schublade gewährleistet diese Parallelführung ein einwandfreies Herausziehen und Einschieben, da kein Verkanten auftreten kann.

Die Schublade besitzt in einer praktischen Ausgestaltung eine Auflagefläche für Tröge, in denen die Objektträgerhalter in der Beschickungsstation und der Entnahmestation aufbewahrt werden. Außerdem weist sie eine senkrechte Außenwand auf, die im eingeschobenen Zustand eine Öffnung im Gehäuse der Vorrichtung verschließt. Darüber hinaus kann zwischen der senkrechten Außenwand der Schublade und dem Wandbereich mit der Öffnung im Gehäuse eine Dichtung angeordnet sein.

Im eingeschobenen Zustand der Schublade bewirkt die senkrechte Außenwand, daß das Gesamtgehäuse vollständig geschlossen ist und so keine Reagenziendämpfe unkontrolliert nach außen treten können. Dabei läßt sich die Schublade so ausbilden, daß ein bündiger Abschluß der Außenwand erzielt wird und keine vorspringenden Teile in den Raum hineinragen, an denen Beschäftigte versehentlich mit der Kleidung hinterhaken können.

Eine Weiterbildung sieht vor, daß zwischen der Öffnung im Gehäuse und an der oberen Abdeckung ein senkrechter und/oder schräger Wandbereich vorhanden ist, der zusammen mit dem übrigen Wandbereich und der oberen Abdeckung auch im herausgezogenen Zustand der Schublade einen Sammelraum für Reagenziendämpfe bildet.

Da Reagenziendämpfe mit einem geringeren spezifischen Gewichts als Luft nach oben steigen, sammeln sie sich bevorzugt im Sammelraum, statt durch die tiefer liegende Öffnung im Gehäuse bei ausgezogener Schublade auszutreten. Im Ergebnis werden so die beschäftigten Personen einer wesentlich geringeren Belastung mit Reagenziendämpfen ausgesetzt, als dies bei bekannten Färbeautomaten und ganz besonders bei der manuellen Färbemethode noch der Fall war.

Vorzugsweise ist der Sammelraum mit einer Absaugvorrichtung verbunden. Diese Absaugvorrichtung sorgt dafür, daß die Konzentration der Reagenziendämpfe im Sammelraum unterhalb der Sättigungsgrenze liegt und verhindert auf diese Weise, daß auch stärkere Konzentrationen in unteren Bereichen zustandekommen. Dies wirkt sich vorteilhaft dann aus, wenn die Schublade zum Einsetzen neuer zu behandelnder Präparate oder Entnahme gefärbter Präparate geöffnet werden muß, da die Konzentration austretender Reagenzien dann stark herabgesetzt ist

Die erfindungsgemäße Vorrichtung umfaßt Behandlungsstationen, in denen Tröge mit Reagenzien stehen, sowie eine Trocknungskammer.

In den Trögen können Reinigungs- und Spülungsflüssigkeiten oder auch Farbstoffe angeordnet sein. Die genaue Anordnung ist prinzipiell von untergeordneter Bedeutung, da für die Durchführung einer bestimmten Färbemethode nicht die Art der Anordnung, sondern nur die Kenntnis der Anordnung für das Steuerungsprogramm von Bedeutung ist. Es ist somit in der Regel unnötig, mehrere Behandlungsstationen mit der gleichen Reagenz vorzusehen, da sich die Verweilzeiten der Objektträgerhalter in den Behandlungsstationen individuell steuern lassen. Sofern die Reagenzien für unterschiedliche Färbemethoden vollständig in einzelnen Behandlungsstationen vorhanden sind, lassen sich auch alle Färbemethoden wahlweise programmieren und durchführen.

Eine bevorzugte Anordnung der Behandlungsstationen in der Vorrichtung sieht vor, daß diese in zwei parallelen Reihen im Gehäuse angeordnet sind.

Die separate Abtropfzone ist zwischen den beiden parallelen Reihen mit Behandlungsstationen angeordnet.

Dadurch wird ein kompakter Aufbau erzielt und die Transportwege für den ungünstigsten Transportfall diagonal auseinanderliegender Behandlungsstationen lassen sich auf diese Weise vermindern.

Bei dieser Anordnung kommt man mit einer einzigen Abtropfvorrichtung aus, da diese sowohl für Behandlungsmaßnahmen in Behandlungsstationen auf der einen als auch auf der anderen Reihe zur Verfügung steht. Besonders, wenn beim Wechseln der anzufahrenden Behandlungsstationen von der einen auf die andere Reihe gewechselt werden muß, stellt das Anfahren der Abtropfstation keinen Umweg auf dem Transport dorthin dar.

Zweckmäßig ist die separate Abtropfzone als wasserführende Kammer ausgebildet, die einen Ein- und Auslaß aufweist.

Dadurch ist es einmal möglich, Präparate auf Objektträgerhaltern auch in dieser wasserführenden Kammer zu spülen, zum anderen lassen sich die abtropfenden Reagenzien in einfacher Weise aus der Vorrichtung entfernen.

Besonders dann, wenn die wasserführende Kammer auch gleichzeitig zu Reinigungszwecken benutzt werden soll, läßt sich durch ständigen Austausch des Wassers ein hoher Reinheitsgrad erreichen.

Zur Aufnahme der Objektträgerhalter in den Behandlungsstationen können Halteelemente vorgesehen werden. Diese sind bei einer bevorzugten Ausbildung als offene Sacknuten in zwei gegenüberliegenden Innenwände der Tröge bzw. der Trocknungskammer ausgebildet. In diese Sacknuten gleiten seitlich vorstehende Schenkel der Kuppelelemente der Objektträgerhalter beim Einsetzen hinein.

Die Sacknuten dienen sowohl zur seitlichen als auch zur Tiefenfixierung. Diese beiden Arten der Fixierung erleichtern es der Transportvorrichtung, einen abgesetzten Objektträgerhalter wieder anzukuppeln und einer nächsten Behandlungsstation zuzuführen.

Weiterhin tragen die Tröge und die Trocknungskammer auf den inneren Wänden Abstands- und/oder Führungsstege.

Diese Abstands- und/oder Führungsstege sorgen ebenfalls für eine definierte Lage der Objektträgerhalter in der jeweiligen Behandlungsstation. Außerdem sichern sie einen Abstand zwischen den Präparaten und der Innenwand, so daß eine ungehinderte Benetzung der Präparate mit den Reagenzien bzw. in der Trocknungskammer mit der Trocknungsluft ermöglicht wird.

Zweckmäßig sind die Abstands- und/oder Führungsstege paarweise auf den beiden Innenwänden angeordnet.

Auf diese Weise wird verhindert, daß sich die Objektträgerhalter innerhalb der Tröge bzw. der Trocknungskammer verkanten können. Die paarweise Führung durch die Abstands- und/oder Führungsstege verbessert so die Präzision der nach dem Einsetzen der Objektträgerhalter eingenommenen Lage.

Eine Weiterbildung sieht vor, daß die Abstands- und/oder Führungsstege über den oberen Rand hinausragen und Einlaufschrägen aufweisen.

Diese Einlaufschrägen sorgen dafür, daß die Objektträgerhalter auch dann einwandfrei in den Trog bzw. die Trocknungskammer hineingleiten, wenn die Transportvorrichtung beim Anfahren der Behandlungsstationen die Position geringfügig verfehlt oder die Tröge in den Behandlungsstationen seitlich versetzt sind. Außerdem kann ein Absenken der Objektträgerhalter bereits dann erfolgen, wenn nach dem sanften Abbremsen der Transportvorrichtung ein geringfügiges Ausschwingen der Objektträgerhalter noch nicht abgeklungen ist.

Eine Weiterbildung sieht vor, daß die Tröge aus nichtmagnetischem Material bestehen und in den Böden der Tröge topfartige Fächer für Rührflügel angeordnet sind.

Mit Hilfe dieser Rührflügel ist ein Umwälzen der Reagenzien in den Trögen auch dann möglich, wenn die Objektträgerhalter unbeweglich in den Halterungen ruhen und nicht von der Transportvorrichtung auf- und abbewegt werden können. Durch die Ausbildung der Tröge aus nichtmagnetischem Material werden die Voraussetzungen für einen magnetischen Antrieb der Rührflügel geschaffen.

Diesbezüglich sieht eine Weiterbildung vor, daß in die Rührflügelanker aus weichem magnetischem Material oder Permanentmagnete integriert sind.

Hierdurch bilden die Rührflügel gleichzeitig einen Teil einer Magnetkupplung oder die Rotoren von außerhalb der Tröge anordnerbaren Antrieben. Der Vorteil einer magnetischen Kupplung besteht darin, daß keine drehbaren Teile durch Wände der Tröge hindurchgeführt werden müssen. Dadurch können Dichtungselemente entfallen, die das aufzuwendende Drehmoment unerwünscht erhöhen und durch Verschleiß mit der Zeit undicht werden.

Vorzugsweise sind in den Behandlungsstationen unterhalb der Tröge Rührantriebe angeordnet, die mit den Ankern oder Permanentmagneten der Rührflügel magnetisch gekoppelt sind.

Durch diese Anordnung wird erreicht, daß die Antriebe stationär im Gehäuseboden verbleiben können, wenn einzelne Tröge entfernt oder durch andere ausgetauscht werden müssen. Das Auffüllen oder der Austausch verbrauchter Reaganzien wird so erheblich vereinfacht.

Eine Weiterbildung sieht vor, daß eine oder mehrere Behandlungsstationen beheizbar sind.

Durch die Heizung lassen sich unterschiedliche Temperaturen für die verschiedenen Reagenzien einstellen, so daß in einigen Behandlungsstationen die Verweildauer der Präparate auf Grund der höheren Prozeßgeschwindigkeit verringert werden kann. Auch dieses Merkmal trägt dazu bei, die benötigte Gesamtzeit bei Anwendung einzelner oder mehrerer unterschiedlicher Färbemethoden zu verringern.

Bei einer praktischen Ausführung sind die beheizbaren Behandlungsstationen nebeneinander angeordnet.

Dadurch lassen sich durch Abstrahlung eintretende unerwünschte Energieverluste reduzieren und vor allem ein Wärmeübergang auf Behandlungsstationen, die nicht erwärmt werden sollen, vermeiden. Die Einrichtung einer Zone, in der sich beheizbare Behandlungsstationen konzentrieren, wird auch dadurch ermöglicht, daß die Behandlungsstationen mittels der Transportvorrichtung wahlweise angefahren werden können und es daher keine Rolle spielt, in welcher Reihenfolge Behandlungsmaßnahmen mit oder ohne erwärmten Reagenzien stattfinden sollen. Die Zone, in der beheizbare Behandlungsstationen angeordnet werden, kann somit auch unter dem Gesichtspunkt einer möglichst geringen elektrischen Störstrahlung auf elektronische Bauteile der Steuerung gewählt werden.

Die Heizelemente können alternativ im Gehäuse unterhalb der Tröge angeordnet und mit den Trögen thermisch gekoppelt sein oder auch an den Trögen selbst angeordnet sein.

Die erste Alternative besitzt den Vorteil, daß die Tröge in den beheizbaren Behandlungsstationen baugleich mit denen in unbeheizbaren Behandlungsstationen sein können und daher auch leicht austauschbar sind.

Die zweite Alternative erfordert spezielle Tröge, erleichtert aber die thermische Kopplung zwischen den Heizelementen und den Trögen.

Bei einer Weiterbildung der zweiten Alternative sind Heizelemente an der Unterseite der Böden und den Außenseiten der Wände angeordnet.

Hierdurch ergibt sich eine besonders enge Wärmekoppelung zwischen den Heizelementen und den Trögen, wodurch erreicht werden kann, daß die Wärmeenergie wirksam auf die Reagenzien übergeht, statt in die Umgebung abzustrahlen. Die Anordnung sowohl an den Böden als auch den Außenwänden der Wände gewährleistet eine gleichmäßige Verteilung und damit eine homogene Erwärmung der Reagenzien. Durch die großflächige Wärmeübertragung entfällt die Notwendigkeit, die Heizelemente auf eine weit erhöhte Übertemperatur über die anzustrebende Erwärmungstemperatur der Reagenzien bringen zu müssen.

Die Heizelemente können auch in die Böden und/oder in die Wände integriert sein.

Dadurch ergibt sich eine noch bessere Einkoppelung der Wärmeenergie in die Reagenzien.

Bei einer praktischen Ausgestaltung sind Temperaturfühler und mit den Temperaturfühlern und den Heizelementen verbundene Regelschaltungen vorgesehen. Die Temperaturfühler sind thermisch mit den Böden oder den Wänden der Tröge gekoppelt.

Hierdurch können für jede Behandlungsstation individuelle Temperaturen eingestellt und auch die durch Verdampfung, Abstrahlung oder Wärmeübertragung auf die Objektträger auftretenden Wärmeverluste individuell und schnell ausgeglichen werden, so daß stets die für einen optimalen Behandlungsablauf erforderliche Temperatur gewährleistet ist.

Vorzugsweise sind Bereiche an der Unterseite der Tröge unterhalb der Fächer von Heizelementen und Temperaturfühlern ausgespart.

Dadurch wird auch bei beheizbaren Trögen eine einwandfreie magnetische Koppelung zwischen den Antrieben und den Rührflügeln hergestellt.

Die Hebe- und Senkvorrichtung der Transportvorrichtung weist eine Parallelführung für das Kuppelelement auf, die aus zwei Führungsstangen besteht.

Hierdurch wird erreicht, daß das Kuppelelement auch dann waagerecht ausgerichtet bleibt, wenn der zu transportierende Objektträgerhalter einseitig bestückt oder belastet ist.

Weiterbildungen und vorteilhafte Ausgestaltungen der Erfindung ergeben sich aus den Ansprüchen, der weiteren Beschreibung und der Zeichnung, die ein Ausführungsbeispiel veranschaulicht.

In der Zeichnung zeigen:
- Fig. 1: eine perspektivische, teilweise gebrochene Ansicht einer Vorrichtung nach der Erfindung,
- Fig. 2: einen Längsschnitt durch die Vorrichtung gemäß Fig. 1,
- Fig. 3: einen Querschnitt durch die Vorrichtung gemäß Fig. 1,
- Fig. 4: einen Längsschnitt durch eine Schublade,
- Fig. 5: einen Querschnitt durch eine Schublade,
- Fig. 6: einen Längsschnitt durch einen Trog,
- Fig. 7: einen Querschnitt durch einen Trog,
- Fig. 8: eine Draufsicht auf einen Trog,
- Fig. 9: eine Längsansicht eines Objektträgerhalters,
- Fig. 10: eine Queransicht eines Objektträgerhalters,
- Fig. 11: einen Querschnitt durch einen Trog mit einer Beheizungsvorrichtung.
- Fig. 12: einen weiteren Querschnitt durch einen Trog mit einer Beheizungsvorrichtung.

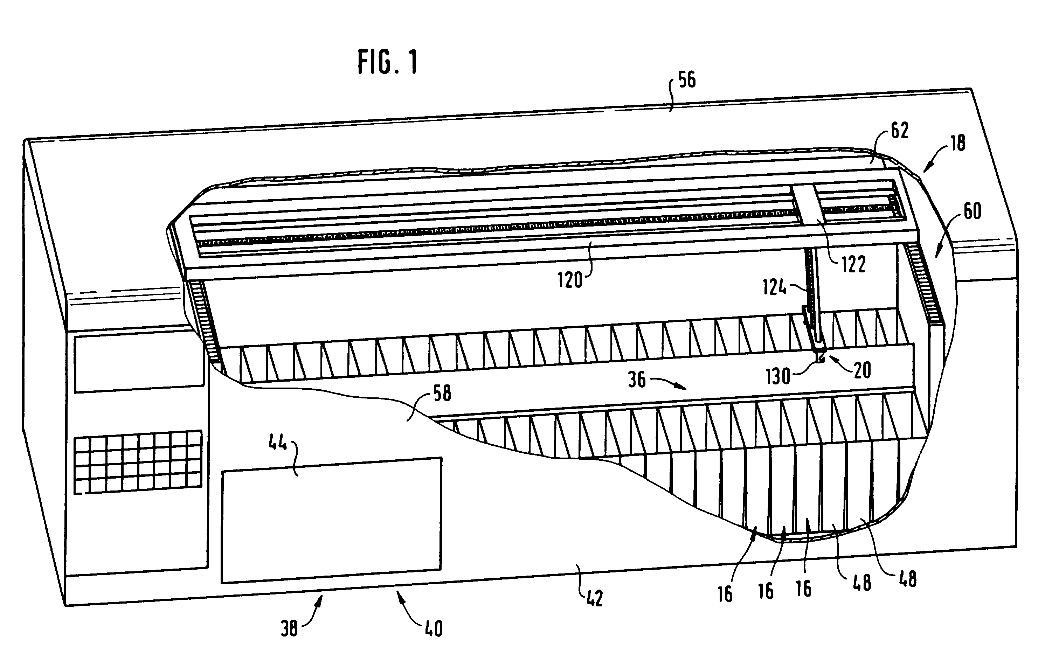

Die Figuren 1 bis 3 zeigen eine Vorrichtung zur Färbung von auf Objektträgern angeordneten histologischen Präparaten.

Die Vorrichtung umfaßt ein Gehäuse 42 mit mehreren Behandlungsstationen 16. In den Behandlungsstationen 16 befinden sich Tröge 48 mit Reagenzien zur Vorbehandlung und Färbung sowie eine Trocknungskammer 64.

Die Behandlungsstationen 16 bilden im Gehäuse 42 zwei parallele Reihen 66 und 68 und zwischen diesen Reihen befindet sich eine Abtropfzone 36, die als wasserführende Kammer 70 ausgebildet ist. Oberhalb der Behandlungsstationen 16 ist eine Transportvorrichtung 18 angeordnet. Ferner ist im vorderen Bereich des Gehäuses 42 eine Beschickungsstation 38 und eine Entnahmestation 40 vorgesehen, zu der eine waagerecht verschiebbare Schublade 44 gehört.

Die Transportvorrichtung 18 ermöglicht Transportbewegungen in drei Koordinatenachsen. Dadurch können die Behandlungsstationen 16 in jeder beliebigen Reihenfolge angefahren werden. Ein erster Transportschlitten 120 ist in Querrichtung verfahrbar. Er ruht auf zwei gehäuseseitigen Schienen und ist mit einem Parallelantrieb ausgestattet, der auf beiden Schiene eine synchrone Bewegung sicherstellt.

Auf dem ersten Transportschlitten 120 ist ein zweiter Transportschlitten 122 für eine Bewegung in Längsrichtung angeordnet. Da die Spannweite dieses zweiten Transportschlittens 122 kleiner ist, kommt er ohne Parallelantrieb aus. Der zweite Transportschlitten 122 wiederum trägt eine Hebe- und Senkvorrichtung 124. Die beiden Transportschlitten 120 und 122 sowie die Hebe- und Senkvorrichtung 124 werden durch Stellglieder 30, 32 und 34 angetrieben, die als Schrittmotore, geregelte Gleichstrommotore als Servomotore ausgebildet sind. Die erreichte Position wird über Sensoren erfaßt, die jedoch aus Gründen der zeichnerischen Übersichtlichkeit hier nicht dargestellt sind. Durch diese Ausgestaltung wird eine sehr genaue reproduzierbare Positionierung ermöglicht.

Die Stellglieder 30, 32 und 34 sind Bestandteil einer Steuerung 24, die außerdem einen Rechner 28 und einen Speicher 26 umfaßt.

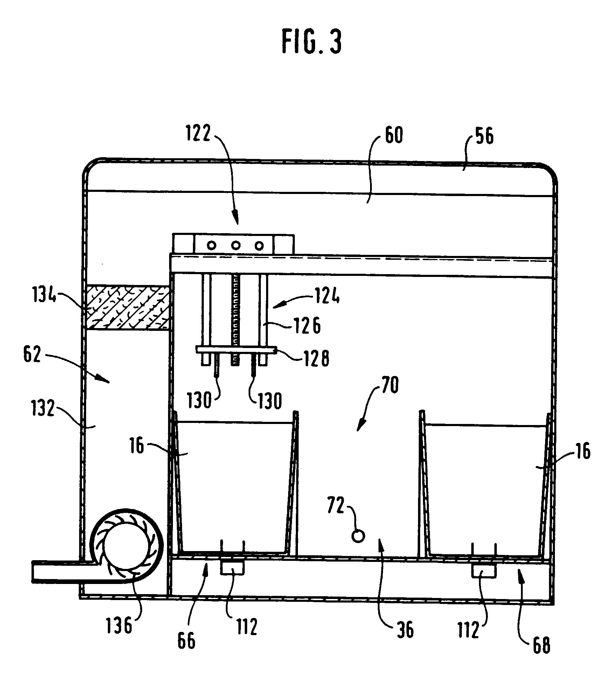

Wie insbesondere aus Fig. 3 ersichtlich ist, weist die Hebe- und Senkvorrichtung 124 eine Parallelführung für ein Kuppelelement 20 auf. Das Kuppelelement 20 besteht aus einer Trägerplatte 128 und zwei im Abstand angeordneten parallelen Greifhaken 130.

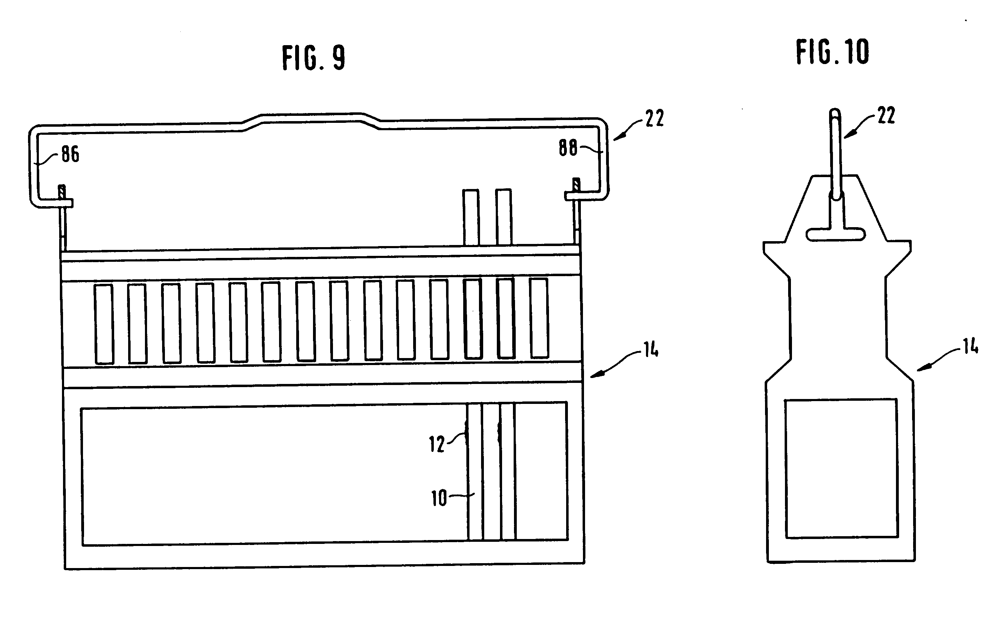

Diese Greifhaken 130 sind an entsprechende Kuppelelemente 22 auf Seiten der Objektträgerhalter 14 angepaßt. Letztere sind in den Figuren 9 und 10 dargestellt. Wie aus der Zeichnung erkennbar, werden die Kuppelemente 22 durch die Henkel dieser Objektträgerhalter 14 gebildet.

Das Einkuppeln der Greiferhaken 130 mit den Kuppelelementen 22 der Objektträgerhalter 14 geschieht dadurch, daß der aufzunehmende Objektträgerhalter 14 zunächst von einer Längsseite angefahren wird, wobei die Greiferhaken 130 soweit abgesenkt sind, daß sie tiefer als die Kuppelelemente 22 der Objektträgerhalter 14 liegen. Wenn die Greiferhaken 130 und die Kuppelelemente 22 fluchten, wird die Hebe- und Senkvorrichtung 124 angehoben und die Kuppelung erfolgt dadurch, daß der Henkel des betreffenden Objektträgerhalters 14 in der Vertiefung der Greiferhaken 130 zu liegen kommt und mit angehoben wird.

Der Objektträgerhalter 14 kann nun zur vorgegebenen Position verfahren werden, indem die beiden Transportschlitten 120 und 122 entsprechend verfahren werden. Nach Erreichen der gewünschten Position wird die Hebe- und Senkvorrichtung 124 abgesenkt bis der Objektträgerhalter 14 in einer Halterung der Behandlungsstation 16 aufliegt.

Die Greifhaken 130 fahren dann noch ein bißchen weiter nach unten, bis sich der Henkel aus den Greifhaken gelöst hat. Danach wird der zweite Schlitten 122 wieder verfahren und anschließend kann in ähnlicher Weise ein anderer Objektträgerhalter 14 aufgenommen werden.

Die Betätigung der Transportvorrichtung 18 erfolgt mit der Steuerung 24. Im Speicher 26 ist ein Programmraster gespeichert, das Transportzeiten, Behandlungszeiten, Behandlungstemperaturen und Behandlungsstationen 16 umfaßt, die angefahren werden sollen. Je nach der gewählten Färbemethode wird ein bestimmtes Programmraster im Speicher 26 ausgewählt, das den Rechner 28 veranlaßt, über die Stellglieder 30, 32 und 34 den Bewegungsablauf zu steuern. Wenn mehrere unterschiedliche Färbemethoden zur gleichen Zeit ablaufen, wird an Hand der gespeicherten Programmraster der Programmstart unterschiedlicher Färbemethoden im Sinne eines überlappungsfreien Parallellaufs der Programmraster gesteuert. Ist also z. B. der Färbeprozeß für einen ersten Objektträgerhalter 14 eingeleitet worden, so ermittelt das Programm an Hand der Programmraster der Färbemethode für den laufenden Färbeprozeß und der Programmraster für weitere Färbeprozesse den Startzeitpunkt, an dem der nächste Färbeprozeß beginnen kann. Sobald dieser Startzeitpunkt erreicht ist, wird der nächste Objektträgerhalter 14 in den Prozeßablauf einbezogen.

Zur Vorbereitung eines Färbeprozesses werden Präparate 12 auf Objektträgern 10 in Objektträgerhalter 14 eingesetzt wie es Fig. 10 veranschaulicht, und die Objektträgerhalter 14 in eine Beschickungsstation 38 gestellt. Aus dieser Beschickungsstation 38 werden die Objektträgerhalter 14 nacheinander von der Transportvorrichtung 18 automatisch entnommen und den vom Programm anhand der gewählten Färbemethode vorgesehenen Behandlungsstationen 16 zugeführt. Nach Beendigung des Färbeprozesses werden die Objektträgerhalter 14 in einer Entnahmestation 40 abgestellt.

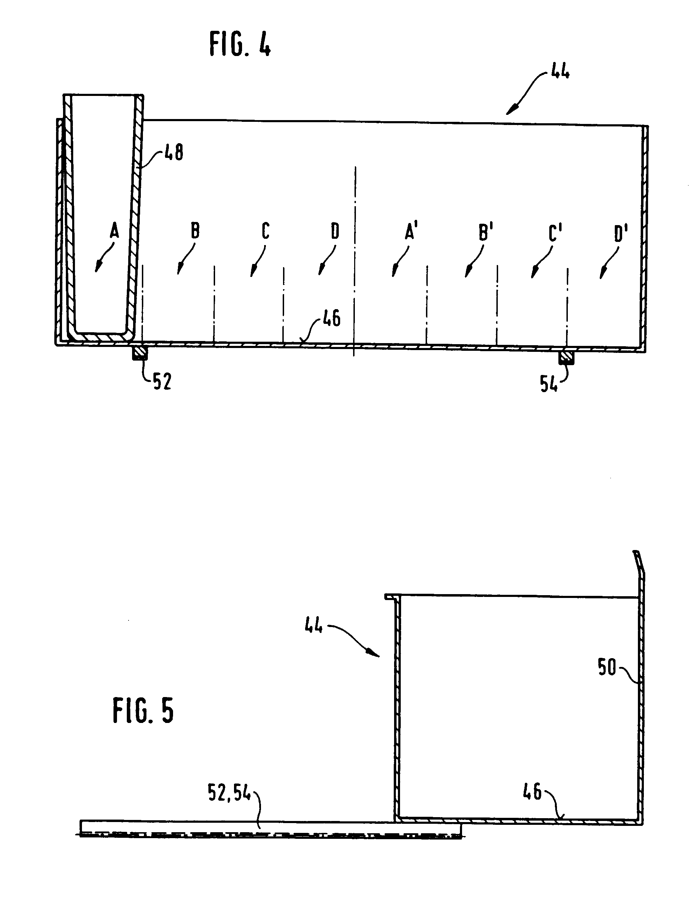

Die Beschickungsstation 38 und Entnahmestation 40 sind durch eine seitliche Öffnung im Gehäuse 42 zugänglich. Das Einsetzen vorbereiteter Objektträgerhalter 14 bzw. das Herausnehmen behandelter Objektträgerhalter 14 erfolgt mittels einer waagerecht verschiebbaren Schublade 44, die im Detail in den Figuren 4 und 5 dargestellt ist.

Die Schublade 44 besitzt eine Auflagefläche 46, auf der Tröge 48 für Objektträgerhalter 14 abgestellt werden können. Auf der linken Seite sind Positionen A, B, C und D angedeutet, auf die Objektträgerhalter 14 in die Beschickungsstation 38 gelangen, während auf der rechten Seite entsprechende Positionen A', B', C' und D' markiert sind, in der die behandelten Objektträgerhalter 14 in der Entnahmestation 40 abgestellt werden. Durch das Programm ist dafür gesorgt, daß die Objektträgerhalter nach Durchführung des Färbeprozesses in der gleichen Position in der Entnahmestation 40 abgestellt werden, in der sie auch in die Beschickungsstation 38 hineingestellt wurden.

In der eingeschobenen Lage der Schublade 44 besteht eine Zugriffsmöglichkeit der Transportvorrichtung 18 auf die Objektträgerhalter 14, während in der ausgezogenen Lage der Schublade 44 ein manuelles Einsetzen und Herausnehmen der Objektträgerhalter 14 ermöglicht ist. Zwei Zahnstangen 52 und 54, die mit auf einer gemeinsamen Welle angeordneten Zahnrädern in Eingriff stehen, sorgen für eine Parallelführung der Schublade 44 sowohl bei automatischer als auch bei manueller Betätigung.

Die Schublade 44 weist eine aufrechte, in diesem Fall senkrechte, Außenwand 50 auf, die im eingeschobenen Zustand eine Öffnung im Gehäuse 42 der Vorrichtung verschließt. Zwischen der Außenwand 50 der Schublade 44 und dem Wandbereich mit der Öffnung im Gehäuse 42 kann auch eine Dichtung angeordnet sein.

Wie die Detaildarstellung der Schublade 44 in Verbindung mit Fig. 1 veranschaulicht, ist zwischen der Öffnung im Gehäuse 42 und einer oberen Abdeckung 56 ein senkrechter Wandbereich 58 vorhanden. Er begrenzt zusammen mit dem übrigen Wandbereich und der oberen Abdeckung 56 auch im herausgezogenen Zustand der Schublade 44 einen Sammelraum 60 für Reagenziendämpfe.

Während im geschlossenen Zustand der Schublade die Öffnung ohnehin abgedichtet ist und somit keine Reagenziendämpfe nach außen treten können, wird auch im geöffneten Zustand zum Einsetzen und Herausnehmen der Objektträgerhalter 14 ein unkontrolliertes Entweichen der Reagenziendämpfe verhindert. Auf Grund ihres im Vergleich zur Luft geringen spezifischen Gewichts steigen die Reagenziendämpfe nach oben und konzentrieren sich im Sammelraum 60, so daß sich im unteren Bereich des Gehäuses 42 nur Dämpfe geringerer Konzentration aufhalten und damit ein Austritt aus der Öffnung stark vermindert ist. Durch eine im hinteren Teil des Gehäuses 42 angeordnete Absaugvorrichtung 62, mit der der Sammelraum 60 verbunden ist, wird zudem auch die Konzentration der Reagenziendämpfe im Sammelraum 60 vermindert, wodurch ein merklicher Austritt der Reagenziendämpfe bei geöffneter Schublade 44 noch weiter reduziert ist. Die aus Fig. 3 ersichtliche Absaugvorrichtung 62 besteht aus einem Luftkanal 132 mit einem Kohlefilter 134 am Einlaß und einem oder mehreren Lüftern 136. Abgesaugte Dämpfe werden nach weitgehender Reinigung durch das Kohlefilter 134 über ein an der Rückseite angeschlossenes Rohr ins Freie geführt.

Die Behandlungsstationen 16 im Gehäuse 42 der Vorrichtung befinden sich an genau festgelegten Orten, die auch im Steuerprogramm der Steuerung gespeichert sind. So können sie gezielt angefahren werden. Die in den Behandlungsstationen 16 stehenden Tröge 48 enthalten als Reagenzien Reinigungs- und Spülmittel sowie die eigentlichen Färbereagenzien. Eine besondere, im Zusammenhang mit dem Programmablauf stehende Reihenfolge der Reagenzien in den Behandlungsstationen 16 ist nicht erforderlich, da alle Behandlungsstationen 16 in kurzer Zeit angefahren werden könne und stets Zugriff zu jeder Behandlungsstation 16 besteht. Dennoch kann es sinnvoll sein, die Behandlungsstationen 16 mit Reagenzien für die häufigsten Färbemethoden so aufzustellen, daß kurze Transportwege zwischen den einzelnen Stationen erzielt werden können.

Diese kurzen Transportwege werden unter anderem dadurch erzielt, daß die Behandlungsstationen 16 in zwei parallelen Reihen 66 und 68 angeordnet sind und zwischen den Behandlungsstationen 16 eine Abtropfzone 36 vorhanden ist. Diese Abtropfzone 36 ist vorzugsweise als wasserführende Kammer 70 ausgebildet und besitzt einen Einlaß 72 und einen Auslaß, damit das von abtropfenden Reagenzien verunreinigte Wasser ausgetauscht werden kann. Die wasserführende Kammer 70 läßt sich neben der Funktion als Abtropfzone auch als weitere Behandlungsstation verwenden, in der Objektträgerhalter 16 mit Objektträgern gewässert werden.

Ein besonderer Vorteil der gewählten Anordnung besteht darin, daß beim Transport von einer Behandlungsstation 16 zur nächsten der Weg stets über die Abtropfzone 36 geführt werden kann, so daß einmal die Verschleppung von Reagenzien zur nächsten Behandlungsstation 16 und die Gefahr einer Verunreinigung derselben verhindert wird. Zum anderen wird der Transportweg dazu ausgenutzt, daß zwischendurch anhaftende Reagenzien von den Objektträgern abtropfen können. Wartezeiten, wie sie bei bekannten Färbeautomaten erforderlich sind, um eine Verunreinigung der Behandlungsstationen mit fremden Reagenzien zu vermeiden, sind daher entbehrlich.

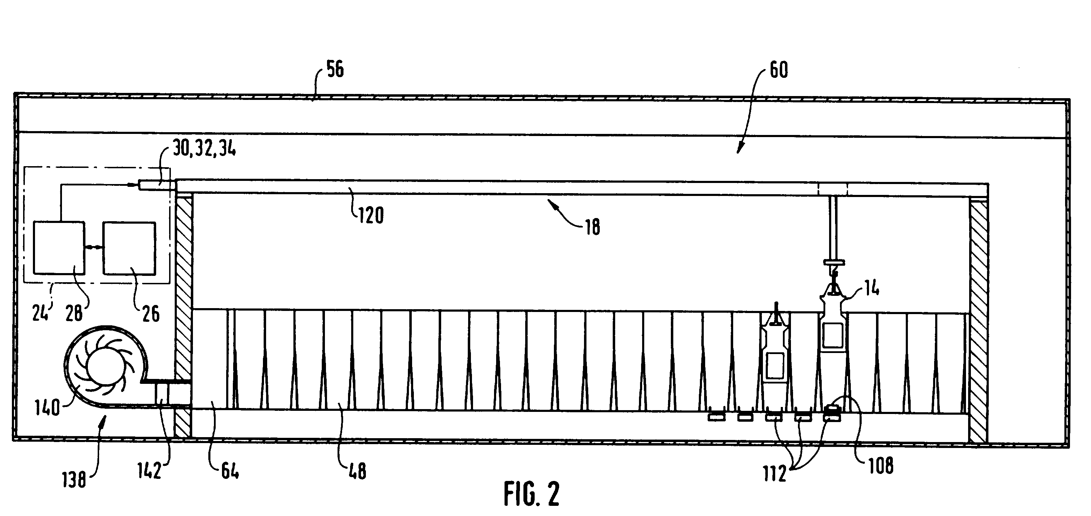

Eine spezielle Behandlungsstation ohne Reagenzien stellt die Trocknungskammer 64 dar. Sie befindet sich an der hinteren linken Wand und ist mit einem Warmluftgebläse 138 verbunden, das im linken Bereich des Gehäuses 42 angeordnet und aus Fig. 2 erkennbar ist. Das Warmluftgebläse besteht aus dem eigentlichen Gebläse 140 und einem Heizkörper 142 im Luftkanal. Die Temperatur der Warmluft kann über einen Temperaturfühler erfaßt und von einer Regelschaltung, die auch durch den Rechner 28 gebildet sein kann, geregelt.

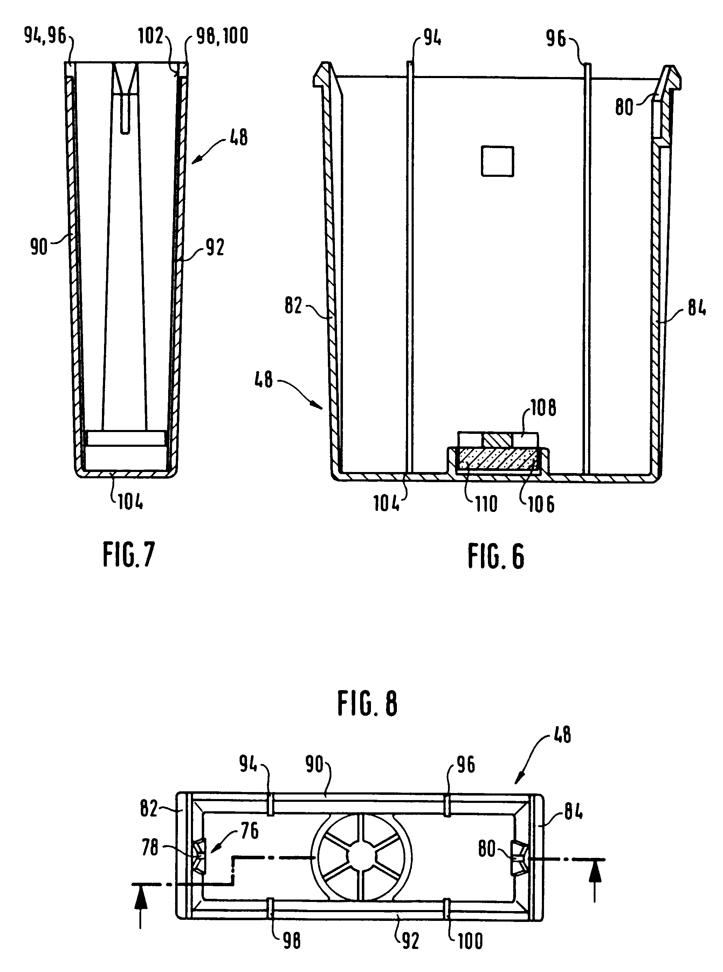

Im Gegensatz zu bekannten Färbetrögen, wie sie bei üblichen Färbeautomaten verwendet werden, zeichnen sich die hier benutzten Tröge 48 durch besondere konstruktive Merkmale aus. Wie aus den Figuren 6, 7 und 8 ersichtlich ist, umfassen die Tröge 48 Halteelemente 76 für eingesetzte Objektträgerhalter 14. Diese Halteelemente 76 bestehen aus oben offenen Sacknuten 78, 80 in zwei gegenüberliegenden Innenbereichen der Wände 82 und 84. In diese Sacknuten 78, 80 gleiten seitlich vorstehende Schenkel 86, 88 der Objektträgerhalter 14 beim Einsetzen hinein. Im eingeschobenen Zustand liegen die Schenkel 86, 88 der Objektträgerhalter 14 am unteren Ende der Sacknuten 78, 80 auf.

Die vorstehenden Schenkel 86, 88 sind oben durch einen Verbindungsschenkel verbunden und bilden einen Henkel. Diese Henkel, die gleichzeitig als Kuppelelemente 22 dienen, werden so zwangsläufig in einer aufrechten Stellung fixiert, so daß sie gezielt von der Transportvorrichtung 18, speziell deren Greifhaken 130 erfaßt werden können.

Wie aus der Zeichnung außerdem ersichtlich ist, sind an den anderen Innenbereichen der Wände 90 und 92 Abstandsund/oder Führungsstege 94, 96, 98, 100 vorgesehen. Die Abstands- und/oder Führungsstege 94, 96, 98, 100 sind paarweise auf den beiden Innenwänden, 90, 92 angeordnet. Sie sorgen dafür, daß die Objektträgerhalter 14 exakt in den Trögen 48 bzw. der Trocknungskammer 64 positioniert sind. Dadurch wird einmal das Absetzen und Aufnehmen durch die Transportvorrichtung erleichtert, zum anderen verbleibt ein Zwischenraum zwischen den Objektträgerhaltern 14 und den Wänden der Tröge 48, so daß die Reagenzien bei Bedarf auch zirkulieren können und so ungehindert zu den Präparaten 12 auf den Objektträgern 10 gelangen können.

Um das Einsetzen der Objektträgerhalter 16 in die Tröge 48 zu erleichtern, weisen die Abstands- und/oder Führungsstege 94, 96, 98, 100 Einlaufschrägen 102 auf, die über den oberen Rand hinausragen. Treten beim Einsetzen geringfügige Verschiebungen auf, so sorgen die Einlaufschrägen 102 dafür, daß diese Positionierungsfehler ausgeglichen werden. Die Objektträgerhalter 14 gleiten so exakt mit ihren Schenkeln 86 und 88 in die Sacknuten 78 und 80 ein.

Aber selbst, wenn keine Positionierungsfehler auftreten, tragen die Einlaufschrägen 102 zur Beschleunigung des Prozeßablaufs bei, da nicht abgewartet werden muß, bis Pendelbewegungen der Objektträgerhalter 14 beim Anhalten der Transportvorrichtung 18 abgeklungen sind. Vielmehr können die Objektträgerhalter 14 bereits unmittelbar nach Erreichen der Behandlungsposition abgesenkt werden. Die Pendelbewegungen werden dann beim Hineinfahren durch die Einlaufschrägen 102 der Abstands- und/oder Führungsstege 94, 96, 98, 100 abgefangen.

Wie weiterhin aus den Detailzeichnungen der Tröge 48 erkennbar ist, besitzen die Tröge 48 topfartige Fächer 106 in den Böden 104. In diesen Fächern 106 können Rührflügel 108 angeordnet werden. Diese Rührflügel 108 ermöglichen bedarfsweise eine Umwälzung der Reagenzien, so daß auch bei ruhendem Objektträgerhalter 14 eine wirksame Umspülung der Präparate mit Reagenzien erfolgen kann.

Die Tröge 48 bestehen aus nichtmagnetischem Material und unterhalb der Tröge 48 sind Rührantriebe 112 angeordnet. Die Rührflügel 108 umfassen integrierte Permanentmagnete 110 und sind mit den Rührantrieben 112 magnetisch gekoppelt. Die Rührantriebe 112 können als mechanische Antriebe mit einer Magnetkupplung ausgestattet sein oder als Drehfeldgeber. Die letztere Ausführung wird bevorzugt, da hierdurch auf ortsfest im Gehäuse angeordnete bewegbare Elemente verzichtet werden kann.

Die Rührantriebe 112 können ständig an ihrem Ort verbleiben, so daß die Tröge 48 bei Verbrauch oder Austausch der Reagenzien ohne weiteres entnommen und wieder eingesetzt oder gewechselt werden können. Dabei sind keine Maßnahmen erforderlich, den Antrieb 112 von den Rührflügeln 108 zu entkuppeln.

Bestimmte Färbeprozesses erfordern auch temperierte Reagenzien. Hierfür sind einige Behandlungsstationen beheizbar ausgestaltet. Die beheizbaren Behandlungsstationen 16 sind vorzugsweise nebeneinander angeordnet, damit Wärmeverluste nicht auf unbeheizte Behandlungsstationen übertragen werden und der Gesamtenergieverbrauch durch Konzentration der beheizbaren Behandlungsstationen vermindert wird. Auch die mögliche Quelle von elektrischen Störsignalen auf Grund von Regelvorgängen integrierter Regelschaltungen läßt sich dadurch auf einen Bereich konzentrieren, wobei durch geeignete Anordnung dieses Bereiches die störende Beeinflussung anderer Baugruppen, z. B. der Steuerung für die Transportvorrichtung vermindert oder beseitigt werden kann.

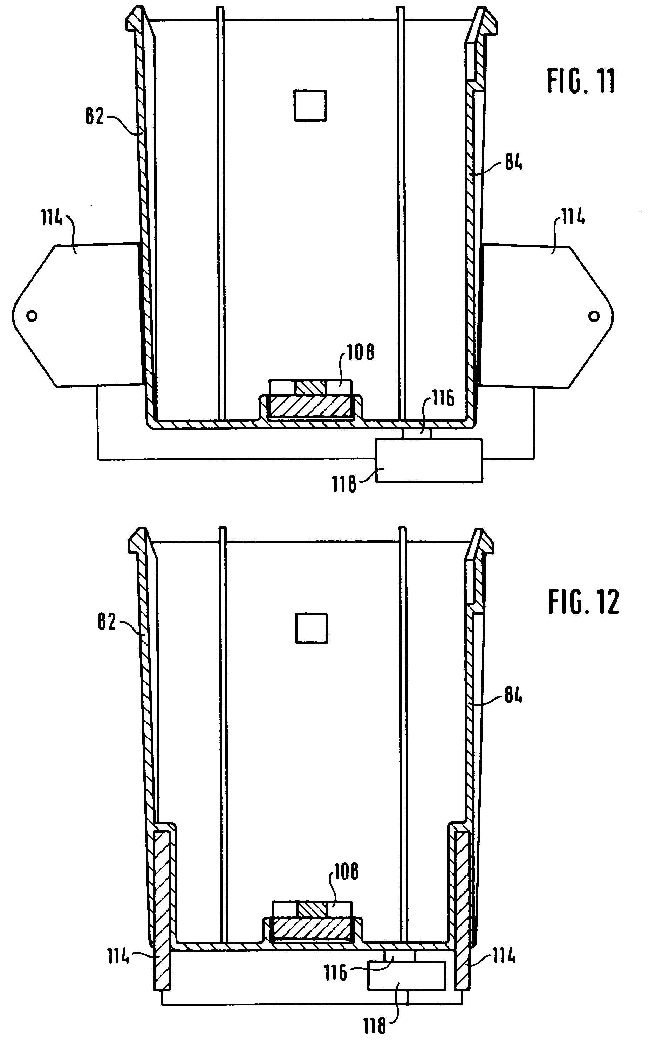

Die Figuren 11 und 12 zeigen Ausführungsbeispiele beheizbarer Tröge. Fig. 11 zeigt einen Querschnitt durch einen Trog 48, bei dem Heizelemente 114 an der Unterseite der Böden 104 und an den Außenseiten der Wände 82, 84 angeordnet sind. Durch diese Anordnung wird eine gleichmäßige Wärmeübertragung auf die Tröge und damit auf die in ihnen befindlichen Reagenzien erreicht. Die Heizelemente 114 können stationär im Gehäuse 42 der Vorrichtung untergebracht sein, so daß die Tröge 48 auch ohne Trennung elektrischer Verbindungen herausgenommen werden können. Bei der dargestellten Ausführung greifen die Heizelemente 114 kraftschlüssig von außen an die Tröge 48 an und ergeben so eine gute Einkoppelung der Wärmeenergie. Diese Ausführung hat den Vorteil, daß die Tröge 48 ohne konstruktive Änderungsmaßnahmen in gleicher Weise für beheizbare Behandlungsstationen wie für unbeheizte verwendet werden können.

Bei einer anderen Ausgestaltung, wie sie Fig. 12 zeigt, sind die Heizelemente 114 in die Böden 104 und in die Wände 82, 84, 90, 92 integriert. Hier ist zwar eine spezielle Ausgestaltung der Tröge 48 erforderlich, es läßt sich jedoch der Wärmeübergang von den Heizelementen 114 auf die Reagenzien verbessern und die Abstrahlung an die Umgebung vermindern.

Bei einer Weiterbildung sind in den Böden 104 oder in den Wänden 82, 84, 90, 92 oder an der Innenseite der Tröge 48 Temperaturfühler 116 angeordnet. Mittels Regelschaltungen 118 lassen sich die Heizelemente 114 so steuern, daß eine konstante Temperatur eingestellt werden kann. Die Temperatur laßt sich für jeden Trog 48 individuell einstellen, so daß die erzielte Behandlungsqualität und Behandlungsdauer der Präparate optimiert werden kann. Dies stellt eine wesentliche Verbesserung gegenüber bekannten Färbeautomaten dar, bei denen die Färbetröge durch ein gemeinsames Wasserbad beheizbar sind und daher nur eine einheitliche Erwärmung möglich ist.

Bereiche an der Unterseite der Tröge 48 unterhalb der Fächer 106 sind von Heizelementen und Temperaturfühlern ausgespart. Dadurch wird auch bei beheizbaren Trögen 48 eine einwandfreie magnetische Koppelung zwischen den Antrieben 112 und den Rührflügeln 108 hergestellt.

Zum Aufbau der beschriebenen Vorrichtung können handelsübliche Materialien und Bauteile verwendet werden, so daß die Herstellung und auch die Einzelteilbeschaffung außerordentlich günstig ist. Mit der Vorrichtung können sämtliche Routine-Färbungen durchgeführt werden, die im üblichen Laborbetrieb anfallen. Dabei wird während des Färbevorgangs ein Kontakt des Laborpersonals mit den Reagenzien und den Präparaten vermieden und durch den automatisierten Prozeßablauf eine hohe, gleichbleibende Qualität erzielt.

Zur Durchführung von Behandlungsmaßnahmen wird wie folgt vorgegangen. Objektträger 10 mit Präparaten 12 werden zunächst in Objektträgerhalter 14 eingeschoben, die Objektträgerhalter 14 dann in entsprechende Positionen A, B, ... der Schublade 44 gestellt und durch Einschieben der Schublade 44 in die Beschickungsstation 38 überführt. Anschließend wird das für jede Position gewünschte Färbeprogramm programmiert oder ein vorprogrammiertes und gespeichertes Färbeprogramm aufgerufen. Nun werden nacheinander mittels der Transportvorrichtung 18 die Objektträgerhalter 14 aus der Beschickungsstation 38 entnommen und den spezifischen Behandlungsstationen 16 zugeführt. Dabei werden in der Regel zunächst die Trocknungskammer 64, danach Vorbehandlungs- und Färbebäder durchlaufen. Beim Transport von einer Behandlungsstation 16 zur anderen, also auch beim Überspringen mehrerer Behandlungsstationen wird der Objektträgerhalter 14 mittig zwischen den zweireihig angeordneten Behandlungsstationen 16 über die Abtropfzone 36 geführt, um eine gegenseitige Verunreinigung der Reagenzien durch noch anhaftende Tropfen der vorhergehenden Behandlungsstation zu vermeiden. In sämtlichen Vorbehandlungs- und Färbebädern können zur Erzeugung einer Flüssigkeitszirkulation die Rührflügel 108 in Betrieb gesetzt werden. Diese werden über stationäre Antriebsvorrichtungen berührungslos angetrieben.

Während der Behandlungsdauer wird vom Rechner 28 das Programmraster des laufenden Behandlungsprozesses mit Programmrastern der weiteren Behandlungsprozesse verglichen und der nächste Objektträgerhalter 14 aus der Beschickungsstation 38 entnommen, sobald ein paralleler Behandlungsablauf gewährleistet ist. Somit können nacheinander alle in die Beschickungsstation 38 gestellten Objektträgerhalter 14 zu den entsprechenden Behandlungsstationen 16 geführt werden, auch wenn der Färbeprozeß des ersten entnommenen Objektträgerhalters noch nicht beendet wurde. Nach Ablauf des Behandlungsprozesses werden dann die Objektträgerhalter 14 in der Entnahmestation 40 in die gleichen Positionen gestellt, in der sie auch in die Beschickungsstation 38 gestellt wurden. Sie können nun zur weiteren Untersuchung durch Ausziehen der Schublade 44 entnommen werden.

## Patentansprüche

1. Verfahren zur Färbung von auf Objektträgern angeordneten histologischen Präparaten, welche programmgesteuert mittels einer Transportvorrichtung in Objektträgerhaltern zu Behandlungsstationen transportiert und dort Behandlungsmaßnahmen entsprechend einer wählbaren Färbemethode ausgesetzt werden, wobei die Transportvorrichtung nach Einsetzen eines Objektträgerhalters in eine Behandlungsstation von diesem getrennt wird und während der Dauer der Behandlungsmaßnahme in dieser Behandlungsstation andere Objektträgerhalter in Abhängigkeit der gewählten Färbemethode zu freien Behandlungsstationen transportiert werden, dadurch gekennzeichnet, daß für jede wählbare Färbemethode ein Programmraster gespeichert ist, das Transportzeiten, Behandlungszeiten, bedarfsweise Behandlungstemperaturen und Behandlungsstationen umfaßt, daß der Programmstart unterschiedlicher Färbemethoden im Sinne eines überlappungsfreien Parallellaufs der Programmraster für jede Färbemethode automatisch berechnet und festgelegt wird und daß die Objektträgerhalter entsprechend der zuvor ermittelten Programmstartreihenfolge nacheinander zu den Behandlungsstationen transportiert werden, sobald ein paralleler Behandlungsablauf gewährleistet ist.

2. Verfahren nach Anspruch 1, dadurch gekennzeichnet, daß der Bewegungsablauf der Transportvorrichtung zwischen den einzelnen Behandlungsstationen so gesteuert wird, daß ein zu transportierender Objektträgerhalter zunächst aus der Ruhe sanft beschleunigt, anschließend mit konstanter Geschwindigkeit verfahren und schließlich sanft abgebremst wird.

3. Verfahren nach Anspruch 1 oder 2, dadurch gekennzeichnet, daß die Objektträgerhalter nach Verlassen einer Behandlungsstation mit flüssigen Reagenzien über eine separate Abtropfzone zur nächsten Behandlungsstation transportiert werden.

4. Verfahren nach einem oder mehreren der Ansprüche 1 bis 3, dadurch gekennzeichnet, daß die auf Objektträgern angeordneten zu färbenden histologischen Präparate nach durchzuführenden Färbemethoden getrennt in Objektträger-haltern in eine Beschickungsstation gestellt werden, daß in einem Steuerprogramm die Position in der Beschickungsstation mit einer gewählten Färbemethode verknüpft wird und daß nach Durchführung der Behandlungsmaßnahmen die Objektträgerhalter in einer Entnahmestation abgestellt werden.

5. Verfahren nach Anspruch 4, dadurch gekennzeichnet, daß die Objektträgerhalter in der Entnahmestation in der gleichen Position abgestellt werden, in der sie auch in die Beschickungsstation eingestellt wurden.

6. Verfahren nach Anspruch 4 oder 5, dadurch gekennzeichnet, daß die Objektträgerhalter durch die Frontseite eines die Beschickungs-, Entnahme- und Behandlungsstationen umschließenden Gehäuses in die Beschickungsstation verbracht und aus der Entnahmestation entnommen werden.

7. Verfahren nach einem oder mehreren der Ansprüche 1 bis 6, dadurch gekennzeichnet, daß die Behandlungsmaßnahmen sowie die Beschickung und Entnahme von Objektträger-haltern bei oberseitigem Abschluß des Gehäuses vorgenommen und Reagenziendämpfe abgesaugt werden.

8. Verfahren nach einem oder mehreren der Ansprüche 1 bis 7, dadurch gekennzeichnet, daß in Behandlungsstationen mit flüssigen Reagenzien eine Umwälzung der Reagenzien während der Behandlungszeit vorgenommen wird.

9. Verfahren nach einem oder mehreren der Ansprüche 1 bis 8, dadurch gekennzeichnet, daß die Behandlung wenigstens teilweise in beheizten Behandlungsstationen vorgenommen wird.

10. Verfahren nach einem oder mehreren der Ansprüche 1 bis 9, dadurch gekennzeichnet, daß vor und/oder nach einzelnen Behandlungsmaßnahmen in Reagenzien eine thermische Behandlungsmaßnahme durchgeführt wird.

11. Vorrichtung zur Färbung von auf Objektträgern (10) angeordneten histologischen Präparaten (12), bestehend aus Objektträgerhaltern (14), Behandlungsstationen (16) und einer Transportvorrichtung (18), mittels der die Objektträgerhalter (14) zu den Behandlungsstationen (16) transportiert und dort Behandlungsmaßnahmen entsprechend einer wählbaren Färbemethode ausgesetzt werden, wobei die Transportvorrichtung (18) und die Objektträgerhalter (14) Kuppelelemente (20, 22) umfassen, welche nach Einsetzen eines Objektträgerhalters (14) in eine Behandlungsstation (16) eine wahlweise Trennung des Objektträgerhalters (14) von der Transportvorrichtung (18) und eine Verbindung mit einem anderen Objektträgerhalter (14) ermöglichen und wobei die Transportvorrichtung (18) eine Steuerung (24) umfaßt, welche während der Dauer der Behandlungsmaßnahme in dieser Behandlungsstation (16) den Transport anderer Objektträgerhalter (14) in Abhängigkeit einer gewählten Färbemethode zu freien Behandlungsstationen (16) steuert, dadurch gekennzeichnet, daß die Steuerung (24) einen Speicher (26) umfaßt, in dem für jede wählbare Färbemethode ein Programmraster gespeichert ist, das Transportzeiten, Behandlungszeiten, bedarfsweise Behandlungstemperaturen und Behandlungsstationen (16) enthält, und daß die Steuerung (24) außerdem einen Rechner (28) umfaßt, der den Programmstart unterschiedlicher Färbemethoden im Sinne eines überlappungsfreien Parallellaufs der Programmraster für jede Färbemethode berechnet und festlegt und daß der Transport der Objektträgerhalter (14) nacheinander von der Beschickungsstation (38) zu den Behandlungsstationen (16) so gesteuert ist, daß ein paralleler Behandlungsablauf gewährleistet ist.

12. Vorrichtung nach Anspruch 11, dadurch gekennzeichnet, daß die Steuerung (24) Stellglieder (30, 32, 34) umfaßt, welche den Bewegungsablauf der Transportvorrichtung (18) zwischen den einzelnen Behandlungsstationen (16) so steuern, daß ein zu transportierender Objektträgerhalter (14) zunächst aus der Ruhe sanft beschleunigt, anschließend mit konstanter Geschwindigkeit verfahren und schließlich sanft abgebremst wird.

13. Vorrichtung nach Anspruch 11 oder 12, dadurch gekennzeichnet, daß eine separate Abtropfzone (36) vorhanden ist, über die die Objektträgerhalter (14) nach Verlassen einer Behandlungsstation (16) mit flüssigen Reagenzien zur nächsten Behandlungsstation (16) transportierbar sind.

14. Vorrichtung nach einem oder mehreren der Ansprüche 11 bis 13, dadurch gekennzeichnet, daß die Vorrichtung eine Beschickungsstation (38) für die nach durchzuführenden Färbemethoden getrennte Aufstellung von auf Objektträgern (10) angeordneten zu färbenden histologischen Präparaten (12) und eine Entnahmestation (40), in der Objektträgerhalter (14) nach Durchführung der Behandlungsmaßnahmen abgestellt werden, umfaßt, daß in einem Steuerprogramm die Position in der Beschickungsstation (38) mit einer gewählten Färbemethode verknüpfbar ist.

15. Vorrichtung nach Anspruch 14, dadurch gekennzeichnet, daß die Beschickungsstation (38) und die Entnahmestation (40) Positionen (A, B, C, D; A', B', C', D') zum Ein- und Abstellen der Objektträgerhalter (14) aufweisen und daß die Transportvorrichtung (18) so gesteuert ist, daß die Objektträgerhalter (14) in der Entnahmestation (40) in der gleichen Position abgestellt werden, in der sie auch in die Beschickungsstation (38) eingestellt wurden.

16. Vorrichtung nach Anspruch 14 oder 15, dadurch gekennzeichnet, daß die Beschickungsstation (38) und die Entnahmestation (40) einen frontseitigen Zugang in einem die Vorrichtung umschließenden Gehäuse (42) besitzen.

17. Vorrichtung nach Anspruch 16, dadurch gekennzeichnet, daß die Beschickungsstation (38) und die Entnahmestation (40) eine waagerecht verschiebbare Schublade (44) umfassen, und daß in der eingeschobenen Lage der Schublade (44) eine Zugriffsmöglichkeit der Transportvorrichtung (18) auf die Objektträgerhalter (14) besteht, während in der ausgezogenen Lage der Schublade (44) ein manuelles Einsetzen und Herausnehmen der Objektträgerhalter (14) ermöglicht ist.

18. Vorrichtung nach Anspruch 17, dadurch gekennzeichnet, daß die Schublade (44) eine Auflagefläche (46) für die Objektträgerhalter (14) oder für Tröge (48) umfaßt, in denen die Objektträgerhalter (44) in der Beschickungsstation (38) und der Entnahmestation (40) aufbewahrt werden.

19. Vorrichtung nach Anspruch 17, dadurch gekenhzeichnet, daß die Schublade (44) eine Parallelführung umfaßt, die aus zwei Zahnstangen (52, 54) besteht, welche mit auf einer gemeinsamen Welle angeordneten Zahnrädern in Eingriff stehen.

20. Vorrichtung nach einem oder mehreren der Ansprüche 17 bis 19, dadurch gekennzeichnet, daß die Schublade (44) eine senkrechte Außenwand (50) aufweist, die im eingeschobenen Zustand eine Öffnung im Gehäuse (42) der Vorrichtung verschließt.

21. Vorrichtung nach Anspruch 20, dadurch gekennzeichnet, daß zwischen der senkrechten Außenwand (50) der Schublade (44) und dem Wandbereich mit der Öffnung im Gehäuse (42) eine Dichtung angeordnet ist.

22. Vorrichtung nach Anspruch 20 oder 21, dadurch gekennzeichnet, daß zwischen der Öffnung im Gehäuse (42) und einer oberen Abdeckung (56) ein senkrechter und/oder schräger Wandbereich (58) vorhanden ist, der zusammen mit dem übrigen Wandbereich und der oberen Abdeckung (56) auch im herausgezogenen Zustand der Schublade (44) einen Sammelraum (60) für Reagenziendämpfe begrenzt.

23. Vorrichtung nach Anspruch 22, dadurch gekennzeichnet, daß der Sammelraum (60) mit einer Absaugvorrichtung (62) verbunden ist.

24. Vorrichtung nach einem oder mehreren der Ansprüche 11 bis 23, dadurch gekennzeichnet, daß die Behandlungsstationen (16) neben Trögen (48) mit Reagenzien, sowie eine Trocknungskammer (64) umfaßt.

25. Vorrichtung nach einem oder mehreren der Ansprüche 11 bis 23, dadurch gekennzeichnet, daß die Behandlungsstationen (16) in zwei parallelen Reihen (66, 68) und die separate Abtropfzone (36) zwischen diesen beiden parallelen Reihen (66, 68) mit stationären Behandlungsstationen (16) im Gehäuse (42) angeordnet ist.

26. Vorrichtung nach einem oder mehreren der Ansprüche 13 bis 25, dadurch gekennzeichnet, daß die separate Abtropfzone (36) als wasserführende Kammer (70) ausgebildet und einen Ein- (72) und einen Auslaß aufweist.

27. Vorrichtung nach einem oder mehreren der Ansprüche 24 bis 26, dadurch gekennzeichnet, daß in den Behandlungsstationen (16) befindliche Tröge (48) oder die Trocknungskammer (64) Halteelemente (76) für eingesetzte Objektträgerhalter (14) umfassen, die als oben offene Sacknuten (78, 80) in zwei gegenüberliegenden Wänden (82, 84) der Tröge (48) bzw. der Trocknungskammer (64) ausgebildet sind, in die seitlich vorstehende Schenkel (86, 88) der Kuppelelemente (22) der Objektträgerhalter (14) beim Einsetzen hineingleiten.

28. Vorrichtung nach Anspruch 27, dadurch gekennzeichnet, daß die Tröge (48) und die Trocknungskammer (64) auf den anderen Innenseiten der Wände (90, 92) Abstandsund/oder Führungsstege (94, 96, 98, 100) tragen.

29. Vorrichtung nach Anspruch 28, dadurch gekennzeichnet, daß die Abstands- und/oder Führungsstege (94, 96, 98, 100) paarweise auf den beiden Innenseiten der Wände (90, 92) angeordnet sind.

30. Vorrichtung nach Anspruch 28, dadurch gekennzeichnet, daß die Abstands- und/oder Führungsstege (94, 96, 98, 100) über den oberen Rand hinausragen und Einlaufschrägen (102) aufweisen.

31. Vorrichtung nach einem oder mehreren der Ansprüche 24 bis 30, dadurch gekennzeichnet, daß die Tröge (48) aus nichtmagnetischem Material bestehen in den Böden (104) der Tröge (48) topfartige Fächer (106) für Rührflügel (108) angeordnet sind.

32. Vorrichtung nach Anspruch 31, dadurch gekennzeichnet, daß in die Rührflügel (108) Anker aus weichmagnetischem Material oder Permanentmagnete (110) integriert sind.

33. Vorrichtung nach Anspruch 32, dadurch gekennzeichnet, daß in den Behandlungsstationen (16) unterhalb der Tröge (48) Rührantriebe (112) angeordnet sind, die mit den Ankern oder Permanentmagneten (110) der Rührflügel (108) magnetisch gekuppelt sind.

34. Vorrichtung nach einem oder mehreren der Ansprüche 11 bis 33, dadurch gekennzeichnet, daß eine oder mehrere Behandlungsstationen (16) beheizbar sind.

35. Vorrichtung nach Anspruch 34, dadurch gekennzeichnet, daß die beheizbaren Behandlungsstationen (16) nebeneinander angeordnet sind.

36. Vorrichtung nach Anspruch 34 oder 35, dadurch gekennzeichnet, daß Heizelemente (114) im Gehäuse (42) unterhalb der Tröge (48) angeordnet und mit den Trögen (48) thermisch gekoppelt sind.

37. Vorrichtung nach Anspruch 34 oder 35, dadurch gekennzeichnet, daß an den Trögen (48) Heizelemente (114) angeordnet sind.

38. Vorrichtung nach Anspruch 37, dadurch gekennzeichnet, daß die Heizelemente (114) an der Unterseite der Böden (104) und/oder an den Außenseiten der Wände (82, 84) angeordnet sind.

39. Vorrichtung nach Anspruch 38, dadurch gekennzeichnet, daß die Heizelemente (114) in die Böden (104) und/oder in die Wände (82, 84, 90, 92) integriert sind.

40. Vorrichtung nach einem oder mehreren der Ansprüche 36 bis 39, dadurch gekennzeichnet, daß Temperaturfühler (116) und mit den Temperaturfühlern (116) und den Heizelementen (114) verbundene Regelschaltungen (118) vorgesehen sind und daß die Temperaturfühler (116) thermisch mit den Böden (104) oder den Wänden (82, 84, 90, 92) der Tröge (48) gekoppelt sind.

41. Vorrichtung nach einem oder mehreren der Ansprüche 37 bis 39, dadurch gekennzeichnet, daß Bereiche im Gehäuse (429 und an der Unterseite der Tröge (48) unterhalb der topfartigen Fächer (106) von Heizelementen und Temperaturfühlern ausgespart sind.

42. Vorrichtung nach Anspruch 44, dadurch gekennzeichnet, daß die Hebe- und Senkvorrichtung (124) eine Parallelführung für das Kuppelelement (20) aufweist, die aus zwei Führungsstangen (126) besteht.

## Claims

1. Method of dyeing histological preparations disposed on object slides, which preparations are transported under programmed control by means of a transporting device in slide carriers to treatment stations and are subjected there to treatment measures corresponding to a selectable dyeing method, wherein the transporting device, after a slide carrier has been inserted into a treatment station, is separated from the slide carrier and, during the period of the treatment measure in this treatment station, other slide carriers are transported to free treatment stations as a function of the selected dyeing method, characterized in that, for each selectable dyeing method, a programme grid is stored, which contains transportation times, treatment times, treatment temperatures where necessary and treatment stations, that the programme start of different dyeing methods is calculated and established automatically for each dyeing method in the sense of an overlap-free, parallel run of the programme grids, and that the slide carriers are transported one after another to the treatment stations according to the previously determined programme start sequence, as soon as a parallel treatment run is assured.

2. Method according to Claim 1, characterized in that the movement sequence of the transporting device between the individual treatment stations is so controlled that a slide carrier to be transported is initially accelerated gently from rest, then moved at constant speed, and finally gently retarded.

3. Method according to Claim 1 or 2, characterized in that the slide carriers, after leaving a treatment station containing liquid reagents, are transported through a separate dripping zone to the next treatment station.

4. Method according to one or more of Claims 1 to 3, characterized in that the histological preparations to be dyed, disposed on slides, are placed separately in slide carriers into a feed station according to the dyeing methods to be carried out, that the position in the feed station is linked in a control programme to a selected dyeing method, and that, after the treatment measures have been carried out, the slide carriers are parked in a discharge station.

5. Method according to Claim 4, characterized in that the slide carriers are parked in the discharge station in the same position in which they were placed also in the feed station.

6. Method according to Claim 4 or 5, characterized in that the slide carriers are brought into the feed station and removed from the discharge station through the front side of a casing surrounding the feed, discharge and treatment stations.

7. Method according to one or more of Claims 1 to 6, characterized in that the treatment measures and also the feed and discharge of slide carriers are performed with the top of the casing closed and reagent vapours are sucked out.

8. Method according to one or more of Claims 1 to 7, characterized in that, in treatment stations with liquid reagents, a circulation of the reagents during the treatment time is carried out.

9. Method according to one or more of Claims 1 to 8, characterized in that the treatment is performed at least partly in heated treatment stations.

10. Method according to one or more of Claims 1 to 9, characterized in that before and/or after individual treatment measures in reagents, a thermal treatment measure is performed.

11. Apparatus for dyeing histological preparations (12) disposed on slides (10), consisting of slide carriers (14), treatment stations (16) and a transporting device (18), by means of which the slide carriers (14) are transported to the treatment stations (16) and subjected there to treatment measures according to a selectable dyeing method, wherein the transporting device (18) and the slide carriers (14) possess coupling elements (20, 22) which, after a slide carrier (14) has been placed in a treatment station (16), make possible an optional separation of the slide carrier (14) from the transporting device (18) and a connection to another slide carrier (14), and wherein the transporting device (18) comprises a control (24) which, during the period of the treatment measure in this treatment station (16), controls the transporting of other slide carriers (14) to free treatment stations (16) as a function of a selected dyeing method, characterized in that the control (24) comprises a memory (26), in which a programme grid is stored for each selectable dyeing method, which (programme grid) contains transport times, treatment times, treatment temperatures when required, and treatment stations (16), and that the control (24) also comprises a computer (28), which calculates and establishes the programme start of different dyeing methods for each dyeing method in the sense of an overlap-free, parallel run of the programme grids, and that the transporting of the slide carriers (14) one after another from the feed station (38) to the treatment stations (16) is so controlled that a parallel treatment sequence is assured.

12. Apparatus according to Claim 11, characterized in that the control (24) comprises actuators (30, 32, 34), which control the movement sequence of the transporting device (18) between the individual treatment stations (16) in such a way that a slide carrier (14) to be transported is first gently accelerated from rest, then moved at constant speed, and finally gently retarded.

13. Apparatus according to Claim 11 or 12, characterized in that a separate dripping zone (36) is present, through which the slide carriers (14) can be transported to the next treatment station (16) after leaving a treatment station (16) containing liquid reagents.

14. Apparatus according to one or more of Claims 11 to 13, characterized in that the apparatus comprises a feed station (38) for the separate stacking, according to dyeing methods to be performed, of histological preparations (12) to be dyed disposed upon slide carriers (10), and a discharge station (40), in which slide carriers (14) are parked after the treatment measures have been performed, and that in a control programme the position in the feed station (38) can be linked to a selected dyeing method.

15. Apparatus according to Claim 14, characterized in that the feed station (38) and the discharge station (40) comprise positions (A, B, C, D; A', B', C', D') for the stacking and parking of the slide carriers (14), and that the transporting device (18) is so controlled that the slide carriers (14) are parked in the discharge station (40) in the same position in which they were stacked in the feed station (38).

16. Apparatus according to Claim 14 or 15, characterized in that the feed station (38) and the discharge station (40) possess a frontside access in a casing (42) surrounding the apparatus.

17. Apparatus according to Claim 16, characterized in that the feed station (38) and the discharge station (40) comprise a horizontally slidable drawer (44), and that, in the pushed-in position of the drawer (44), an access possibility of the transporting device (18) onto the slide carriers (14) exists, whereas in the pulled-but position of the drawer (44), a manual insertion and removal of the slide carriers (14) is made possible.

18. Apparatus according to Claim 17, characterized in that the drawer (44) possesses a seating surface (46) for the slide carriers (14) or for troughs (48), in which the slide carriers (44) are stored in the feed station (38) and the discharge station (40).

19. Apparatus according to Claim 17, characterized in that the drawer (44) comprises a parallel guide, which consists of two toothed racks (52, 54), which are in engagement with toothed wheels disposed on a common shaft.

20. Apparatus according to one or more of Claims 17 to 19, characterized in that the drawer (44) possesses a vertical outer wall (50), which, in the pushed-in state, closes an opening in the casing (42) of the apparatus.

21. Apparatus according to Claim 20, characterized in that, between the vertical outer wall (50) of the drawer (44) and the wall region having the opening in the casing (42), a seal is disposed.

22. Apparatus according to Claim 20 or 21, characterized in that, between the opening in the casing (42) and an upper cover (56), a vertical and/or inclined wall region (58) is present, which, together with the remaining wall region and the upper cover (56), defines a collecting space (60) for reagent vapours also in the pulled-out state of the drawer (44).

23. Apparatus according to Claim 22, characterized in that the collecting space (60) is connected to an extraction device (62).

24. Apparatus according to one or more of Claims 11 to 23, characterized in that the treatment stations (16) comprise, in addition to troughs (48) containing reagents, also a drying chamber (64).

25. Apparatus according to one or more of Claims 11 to 23, characterized in that the treatment stations (16) are disposed in two parallel rows (66, 68) and the separate dripping zone (36) is disposed between these two parallel rows (66, 68) comprising stationary treatment stations (16) in the casing (42).

26. Apparatus according to one or more of Claims 13 to 25, characterized in that the separate dripping zone (36) is constructed as a water-conducting chamber (70) and possesses an inlet (72) and an outlet.

27. Apparatus according to one or more of Claims 24 to 26, characterized in that troughs (48), situated in the treatment stations (16), or the drying chamber (64) comprise holding elements (76) for inserted slide carriers (14), which are constructed as open-topped blind grooves (78, 80) in two mutually opposite walls (82, 84) of the troughs (48) or of the drying chamber (64), into which laterally projecting arms (86, 88) of the coupling elements (22) of the slide carriers (14) slide during insertion.

28. Apparatus according to Claim 27, characterized in that the troughs (48) and the drying chambers (64) carry, on the other internal faces of the walls (90, 92), spacing and/or guiding webs (94, 96, 98, 100).

29. Apparatus according to Claim 28, characterized in that the spacing and/or guiding webs (94, 96, 98, 100) are disposed in pairs on the two inner faces of the walls (90, 92).

30. Apparatus according to Claim 28, characterized in that the spacing and/or guiding webs (94, 96, 98, 100) project above the upper edge and possess entry slopes (102).

31. Apparatus according to one or more of Claims 24 to 30, characterized in that the troughs (48) are of non-magnetic material and pot-like compartments (106) for agitator blades (108) are disposed in the floors (104) of the troughs (48).

32. Apparatus according to Claim 31, characterized in that armatures of soft magnetic material or permanent magnets (110) are integrated into the agitator blades (108).

33. Apparatus according to Claim 32, characterized in that, in the treatment stations (16) beneath the troughs (48), agitator drives (112) are disposed, which are magnetically coupled with the armatures or permanent magnets (110) of the agitator blades (108).

34. Apparatus according to one or more of Claims 11 to 33, characterized in that one or more treatment stations (16) are heatable.

35. Apparatus according to Claim 34, characterized in that the heatable treatment stations (16) are disposed alongside one another.

36. Apparatus according to Claim 34 or 35, characterized in that the heating elements (114) are disposed in the casing (42) beneath the troughs (48) and are thermally coupled to the troughs (48).

37. Apparatus according to Claim 34 or 35, characterized in that heating elements (114) are mounted on the troughs (48).

38. Apparatus according to Claim 37, characterized in that the heating elements (114) are disposed on the underside of the floors (104) and/or on the outer sides of the walls (82, 84).

39. Apparatus according to Claim 38, characterized in that the heating elements (114) are integrated into the floors (104) and/or into the walls (82, 84, 90, 92).

40. Apparatus according to one or more of Claims 36 to 39, characterized in that temperature sensors (116) and control circuits (118), connected to the temperature sensors (116) and the heating elements (114), are provided and that the temperature sensors (116) are thermally coupled with the floors (104) or the walls (82, 84, 90, 92) of the troughs (48).

41. Apparatus according to one or more of Claims 37 to 39, characterized in that regions in the casing (429) and on the underside of the troughs (48) beneath the pot-like compartments (106) of heating elements and temperature sensors are omitted.

42. Apparatus according to Claim 41, characterized in that the raising and lowering device (124) possesses a parallel guide for the coupling element (20), which consists of two guide rods (126).

## Revendications

1. Procédé pour la coloration de préparations histologiques agencées sur des lames de microscope lesquelles, au moyen d'un dispositif convoyeur, commandé par programme, dans des éléments de retenue de lames de microscope, sont transportées vers des postes de traitement où elles sont soumises à des opérations de traitement correspondant à une méthode de coloration choisie, le dispositif convoyeur étant séparé, après l'installation d'un élément de retenue de lame de microscope dans un poste de traitement, de celui-ci et, pendant la durée de l'opération de traitement dans ce poste de traitement, d'autres éléments de retenue de lame de microscope étant transportés suivant la méthode de coloration choisie vers les postes de traitement libres, caractérisé en ce que, pour chaque méthode de coloration qui peut être sélectionnée, une séquence de programme est enregistrée, qui comprend des temps de transport, des temps de traitement, des températures de traitement selon les besoins, et les postes de traitement, en ce que le début du programme des différentes méthodes de coloration, dans le sens d'un débit parallèle de données sans recouvrement de la séquence de programme, est calculé et déterminé automatiquement pour chaque méthode de coloration, et en ce que les éléments de retenue de lames de microscope correspondant à la séquence de début de programme préétablie sont transportés l'un après l'autre aux postes de traitement, si bien qu'un déroulement de traitement parallèle est garanti.

2. Procédé suivant la revendication 1, caractérisé en ce que le déroulement du mouvement du dispositif convoyeur entre les postes de traitement individuels est commandé de manière qu'un élément de retenue de lame de microscope qui doit être transporté accélère doucement en quittant l'arrêt, est ensuite utilisé à vitesse constante et est enfin freiné doucement.

3. Procédé suivant la revendication 1 ou 2, caractérisé en ce que les éléments de retenue de lames de microscope, après avoir quitté un poste de traitement avec réactifs liquides, sont transportés, au-dessus d'une zone d'égouttage séparée, vers des postes de traitement suivants.

4. Procédé suivant une ou plusieurs des revendications 1 à 3, caractérisé en ce que les préparations histologiques à colorier, placées sur des lames de microscope, sont, après des méthodes de coloration à exécuter, séparées dans des éléments de retenue de lames de microscope, placées dans un poste de chargement, en ce que, dans un programme de commande, la position est, dans le poste de chargement, combinée avec une méthode de coloration choisie et en ce que, après exécution des opérations de traitement, les éléments de retenue de lames de microscope sont déposés dans un poste de prélévement.

5. Procédé suivant la revendication 4, caractérisé en ce que les éléments de retenue de lames de microscope sont, au poste de prélèvement, déposés dans la même position qu'ils ont été placés au poste de chargement.

6. Procédé suivant la revendication 4 ou 5, caractérisé en ce que les éléments de retenue de lames de microscope sont, par le côté avant d'une enceinte entourant les postes de chargement, de prélèvement et de traitement, passés dans le poste de chargement et sortis du poste de prélèvement.

7. Procédé suivant une ou plusieurs des revendications 1 à 6, caractérisé en ce qu'on procède aux opérations de traitement, ainsi qu'au chargement et au prélèvement des éléments de retenue de lames de microscope, à la fermeture du côté supérieur de l'enceinte et en ce qu'on aspire les vapeurs de réactifs.

8. Procédé suivant une ou plusieurs des revendications 1 à 7, caractérisé en ce que, dans les postes de traitement avec réactifs liquides, on fait circuler des réactifs pendant le temps de traitement.

9. Procédé suivant une ou plusieurs des revendications 1 à 8, caractérisé en ce qu'on procède au traitement, au moins partiellement dans les postes de traitement chauffés.

10. Procédé suivant une ou plusieurs des revendications 1 à 9, caractérisé en ce qu'on réalise, avant et/ou après des opérations de traitement individuelles dans des réactifs, une opération de traitement thermique.

11. Dispositif pour la coloration de préparations histologiques (12) agencées sur des lames de microscope (10), consistant en des éléments de retenue de lames de microscope (14), des postes de traitement (16) et un dispositif convoyeur (18) au moyen duquel les éléments de retenue de lames de microscope (14) sont transportées vers des postes de traitement où elles sont soumises à des opérations de traitement correspondant à une méthode de coloration choisie, le dispositif convoyeur (18) et les éléments de retenue de lames de microscope (14) comprenant des éléments d'accouplement (20, 22) qui, après l'installation d'un élément de retenue de lame de microscope (14) dans un poste de traitement (16), rendent possible une séparation sélective de l'élément de retenue de lame de microscope (14) et du dispositif convoyeur (18) et, une liaison avec un autre élément de retenue de lame de microscope (14), et le dispositif convoyeur (18) comportant une commande (24) qui, pendant la durée des opérations de traitement dans ce poste de traitement (16), commande le transport d'un autre élément de retenue de lame de microscope (14) en fonction d'une méthode de coloration choisie vers des postes de traitement (16) libres, caractérisé en ce que la commande (24) comporte une mémoire (26), dans laquelle, pour chaque méthode de coloration que l'on peut choisir, est mémorisée une séquence de programme qui comprend des temps de transport, des temps de traitement, des températures de traitement selon le besoin, et des postes de traitement (16), en ce que la commande (24) comporte un calculateur (28) qui calcule et détermine automatiquement le début du programme des différentes méthodes de coloration, dans le sens d'un débit parallèle de données sans recouvrement de la séquence de programme, pour chaque méthode de coloration, et en ce que le transport des éléments de retenue de lames de microscope (14), l'un après l'autre du poste de chargement (38) aux postes de traitement (16), est commandé de manière qu'un déroulement de traitement parallèle est garanti.

12. Dispositif suivant la revendication 11, caractérisé en ce que la commande (24) comporte des pièces de positionnement (30, 32, 34) qui commande le déroulement du mouvement du dispositif convoyeur (18) entre les postes de traitement individuels (16) de manière qu'un élément de retenue de lame de microscope (14) à transporter accélère doucement en quittant l'arrêt, est ensuite utilisé à vitesse constante et est enfin freiné doucement.

13. Dispositif suivant la revendication 11 ou 12, caractérisé en ce qu'une zone d'égouttage séparée (36) est prévue sur laquelle les éléments de retenue de lames de microscope (14), après avoir quitté un poste de traitement (16) avec réactifs liquides, peuvent être transportés vers des postes de traitement suivants.

14. Dispositif suivant une ou plusieurs des revendications 11 à 13, caractérisé en ce que le dispositif comporte un poste de chargement (38) pour l'installation, distincte suivant des méthodes de coloration à exécuter, des préparations histologiques (12) à colorier placées sur des lames de microscopes (10), et un poste de prélèvement (40) où des éléments de retenue de lames de microscope (14) sont prélevés après réalisation des opérations de traitement, et en ce que, dans un programme de commande, la position, dans le poste de chargement, peut être combinée avec une méthode de coloration choisie.

15. Dispositif suivant la revendication 14, caractérisé en ce que le poste de chargement (38) et le poste de prélèvement (40) présentent des positions (A, B, C, D; A', B', C', D') pour les installations et les déchargements des éléments de retenue de lames de microscope (14) et en ce que les éléments de retenue de lames de microscope (14) sortent du poste de prélévement (40) dans la même position qu'ils ont été placés dans le poste de chargement (38).

16. Dispositif suivant la revendication 14 ou 15, caractérisé en ce que le poste de chargement (38) et le poste de prélèvement (40) possèdent une entrée frontale dans une enceinte (42) renfermant le dispositif.

17. Dispositif suivant la revendication 16, caractérisé en ce que le poste de chargement (38) et le poste de prélèvement (40) comportent un tiroir (44) déplaçable horizontalement et en ce que, le tiroir (44) en position fermée, il existe une possibilité d'accès du dispositif convoyeur (18) aux éléments de retenue de lames de microscope (14) alors que, le tiroir (44) en position ouverte, on peut placer et enlever manuellement des éléments de retenue de lames de microscope (14).

18. Dispositif suivant la revendication 17, caractérisé en ce que le tiroir (44) comporte une surface de chargement (46) pour les éléments de retenue de lames de microscope (14) ou pour des bacs (48) dans lesquels sont entreposés, dans le poste de chargement (38) et le poste de prélèvement (40), les éléments de retenue de lames de microscope (14).

19. Dispositif suivant la revendication 17, caractérisé en ce que le tiroir (44) comporte un moyen de guidage parallèle (46) qui consiste en deux crémaillères (52, 54) qui engrènent des roues dentées montées sur un axe commun.

20. Dispositif suivant une ou plusieurs des revendications 17 à 19, caractérisé en ce que le tiroir (44) comporte une paroi externe verticale (50) qui ferme, à l'état fermé, une ouverture dans l'enceinte (42) du dispositif.

21. Dispositif suivant la revendication 20, caractérisé en ce qu'entre la paroi externe verticale (50) du tiroir (44) et la zone de paroi avec l'ouverture dans l'enceinte (42), est disposé un joint.

22. Dispositif suivant la revendication 20 ou 21, caractérisé en ce qu'entre l'ouverture dans l'enceinte (42) et un couvercle supérieur (56), est prévue une zone de paroi (58) verticale et/ou oblique qui, avec la zone de paroi initiale et le couvercle supérieur (56), limite aussi, à l'état tiré du tiroir (44), une chambre réservoir (60) pour les vapeurs de réactif.

23. Dispositif suivant la revendication 22, caractérisé en ce que la chambre réservoir (60) est reliée à un dispositif d'aspiration (62).

24. Dispositif suivant une ou plusieurs des revendications 11 à 23, caractérisé en ce que les postes de traitement (16) comportent, encore, des bacs (48) avec réactifs, ainsi qu'une chambre de séchage (64).

25. Dispositif suivant une ou plusieurs des revendications 11 à 23, caractérisé en ce que les postes de traitement (16) en deux rangées parallèles (66, 68) et la zone d'égouttage (36) entre ces deux rangées parallèles (66, 68) comportent, dans l'enceinte (42), des postes de traitement stationnaires (16).

26. Dispositif suivant une ou plusieurs des revendications 11 à 25, caractérisé en ce que les zones d'égouttage (36) sont prévues comme des chambres contenant de l'eau (70) et comportent une admission (72) et une vidange.

27. Dispositif suivant une ou plusieurs des revendications 11 à 26, caractérisé en ce que des bacs (48), qui se trouvent dans les postes de traitement (16), ou la chambre de séchage (64) comportent, pour des éléments de retenue de lames de microscope (14) qui y sont déposés, des éléments de blocage (76) qui ont la forme d'encoches en sac (78, 80) ouvertes en haut sur les deux parois (82, 84) opposées des bacs (48) ou de la chambre de séchage (64) et dans lesquels coulissent, pour les déposer, les branches (86, 88) qui sortent latéralement des éléments d'accouplement (22) des éléments de retenue de lames de microscope (14).

28. Dispositif suivant la revendication 27, caractérisé en ce que les bacs (48) et la chambre de séchage (64) portent sur les autres côtés internes des parois (90, 92) des barrettes d'écartement et/ou de guidage (94, 96, 98, 100).

29. Dispositif suivant la revendication 28, caractérisé en ce que les barrettes d'écartement et/ou de guidage (94, 96, 98, 100) sont arrangées par paires sur les deux côtés internes des parois (90, 92).

30. Dispositif suivant la revendication 28, caractérisé en ce que les barrettes d'écartement et/ou de guidage (94, 96, 98, 100) sont en saillie sur les bords supérieurs et présentent des pentes d'entrée (102).

31. Dispositif suivant une ou plusieurs des revendications 24 à 30, caractérisé en ce que, dans les fonds (104) des bacs (48), les bacs (48) comportent des ventilateurs (106) pour ailettes d'agitation (108) en forme de pot en matériau non magnétique.

32. Dispositif suivant la revendication 31, caractérisé en ce que, dans les ailettes d'agitation (108), sont intégrées des armatures en matériau magnétique doux ou des aimants permanents (110).

33. Dispositif suivant la revendication 32, caractérisé en ce que, dans les postes de traitement (12) sous les bacs (48), sont prévus des moteurs agitateurs (112) qui sont couplés aux armatures ou aux aimants permanents (110) des ailettes d'agitation (108).

34. Dispositif suivant une ou plusieurs des revendications 11 à 33, caractérisé en ce que un ou plusieurs postes de traitement (16) peuvent être chauffés.

35. Dispositif suivant la revendication 32, caractérisé en ce que les postes de traitement (16) qui peuvent être chauffés sont disposés les uns à côté des autres.

36. Dispositif suivant la revendication 34 ou 35, caractérisé en ce que des éléments de chauffage (114) sont prévus dans l'enceinte (42) sous les bacs (48) et sont thermiquement couplés aux bacs (48).

37. Dispositif suivant la revendication 34 ou 35, caractérisé en ce que, sur les bacs (48), sont prévus des éléments de chauffage (114).

38. Dispositif suivant la revendication 37, caractérisé en ce que les éléments de chauffage (114) sont prévus sur le côté interne des fonds (104) et/ou sur les côtés externes des parois (82, 84).

39. Dispositif suivant la revendication 38, caractérisé en ce que les éléments de chauffage (114) sont intégrés dans les fonds (104) et/ou dans les parois (82, 84, 90, 92).

40. Dispositif suivant une ou plusieurs des revendications 36 à 39, caractérisé en ce que des sondes de température (116) et des circuits de régulation (118) reliés aux sondes de température (116) et aux éléments de chauffage (114) sont prévus et en ce que les sondes de température (116) sont thermiquement couplées avec les fonds (104) ou les parois (82, 84, 90, 92).

41. Dispositif suivant une ou plusieurs des revendications 37 à 39, caractérisé en ce que, dans l'enceinte (42) et sur les côtés inférieurs des bacs (48) sous les ventilateurs (106) en forme de pot, sont creusées des zones d'éléments de chauffage et de sondes de température.

42. Dispositif suivant la revendication 41, caractérisé en ce que le dispositif de montée et de descente (124) présente un moyen de guidage parallèle pour l'élément en coupole (20) qui est formé de deux barres de guidage (126).
